# EUROPEAN PATENT APPLICATION

(11) **EP 2 186 866 A1**
(43) Date of publication of application: **19.05.2010**
(21) Application number: 08830078.5
(22) Date of filing: 12.09.2008
(51) Int. Cl.: C09D 201/10, C08F 220/10, C08F 220/54, C08L 101/10

(54) **HYDROPHILIC COMPOSITION**

(30) Priority: 12.09.2007 JP 2007236854; 25.03.2008 JP 2008079327
(71) Applicant: Fujifilm Corporation, Tokyo 106-0031 (JP)
(72) Inventor: FUKUDA, Makoto c/o FUJIFILM Corporation, Kanagawa (JP); HOSHI, Satoshi c/o FUJIFILM Corporation, Tokyo (JP); TANAKA, Satoshi c/o FUJIFILM Corporation, Kanagawa (JP); KONDO, Yoshiaki c/o FUJIFILM Corporation, Kanagawa (JP)
(74) Representative: HOFFMANN EITLE
(86) International application number: PCT/JP2008/066592
(87) International publication number: WO 2009/035105

(57) **Abstract**

A hydrophilic composition containing a hydrophilic polymer (A) having two or more hydrolyzable silyl groups per molecule and a catalyst (B), with the surface zeta potential of a coating film obtained by coating and drying the hydrophilic composition being from -15 mV to 10 mV, is provided for the purpose of providing a hydrophilic composition capable of forming a hydrophilic coating film having excellent scratch resistance and antifouling properties without hybridizing with sol-gel.

## Description

### TECHNICAL FIELD

The present invention relates to a hydrophilic composition useful for forming a hydrophilic film having antifouling properties, scratch resistance, wear resistance, antifogging properties, and better antifouling properties on the surface of various substrates, and to a hydrophilic member having an antifouling and antifogging surface equipped with a hydrophilic film formed from the hydrophilic composition.

### BACKGROUND ART

Various techniques for preventing adhesion of oily stain onto the surface of a member have been proposed. In particular, optical members such as antireflection films, optical filters, optical lenses, lenses for spectacles, and mirrors suffer adhesion of stains such as fingerprints, sebaceous matter, sweat, and cosmetics by the use of a person, whereby not only their functions are reduced, but the removal of the stain is complicated. Therefore, it is desired to apply an effective stain-preventing treatment.
Also, in recent years, with the spread of mobiles, a display has been frequently used outdoors. When a mobile is used under an environment where external light is made incident, this incident light is regularly reflected on the display surface, and the reflected light is mixed with displayed light, whereby a problem that a displayed image is difficultly viewed or other problem is caused. For this reason, an antireflection optical member is frequently disposed on the display surface.
As such an antireflection optical member, for example, there is known one obtained by stacking a high refractive index layer and a low refractive index layer each composed of a metal oxide on a surface of a transparent substrate; one obtained by forming a single layer of a low refractive index layer made of an inorganic or organic fluorinated compound, etc. on the surface of a transparent substrate; or one obtained by forming a coating layer containing transparent fine particles on the surface of a transparent plastic film substrate, thereby making external light irregularly reflect on the uneven surface. Similar to the aforesaid optical members, when used by a person, a stain such as fingerprints or sebaceous matter is easy to adhere onto the surface of such an antireflection optical member, and only a portion where the stain has adhered becomes high in reflection, thereby causing a problem that the strain is more conspicuous. In addition to the problem, there has also been encountered a problem that the removal of the stain is difficult because fine irregularities are usually present on the surface of the antireflection film.

Various techniques for forming on the surface of a solid member an antifouling function having performance to make a stain difficultly adhere onto the surface or to make it easy to remove an adhered stain have been proposed. In particular, as a combination of an antireflection member and an antifouling member, there have been proposed, for example, an antifouling, anti-friction material having an antireflection film composed mainly of silicon dioxide and treated with an organosilicon substituent-containing compound (see, for example, patent document 1); and an antifouling, anti-friction CRT filter in which the surface of a substrate is coated with a silanol-terminated organic polysiloxane (see, for example, patent document 2) have been proposed. Also, an antireflection film containing a silane compound including polyfluoroalkyl group-containing silane compounds (see, for example, patent document 3); and a combination of an optical thin film composed mainly of silicon dioxide and a copolymer of a perfluoroalkyl acrylate and an alkoxysilane group-containing monomer (see, for example, patent document 4) have been proposed.
However, the antifouling layer which is formed by a conventional method is insufficient in antifouling properties and, in particular, it is difficult to wipe off a stain such as fingerprints, sebaceous matter, sweat, and cosmetics. Also, in the surface treatment with a material having low surface energy, such as fluorine or silicon materials, there exist fears that the antifouling performance is reduced with a lapse of time. For this reason, development of an antifouling member with excellent antifouling properties and durability has been desired.

With a resin film which is used in many ways for the surface of an optical member, etc. or an inorganic material such as glasses and metals, it is general that its surface is hydrophobic or exhibits weak hydrophilicity. When the surface of a substrate using a resin film, an inorganic material or the like is hydrophilized, adherent droplets are uniformly spread on the surface of the substrate to form a homogeneous water film. Therefore, the fogging of glass, a lens or a mirror can be effectively prevented, which is useful for preventing devitrification to be caused due to hygroscopic moisture, securing visibility in the rain, or the like. Furthermore, urban soot, a combustion product contained in exhaust gases from automobiles, etc., such as carbon black, or hydrophobic pollutants such as fats and oils and sealant elution components difficultly adhere thereto, and even when it adheres, it is simply dropped off by rainfall or water washing. Therefore, such a material is useful for various applications.

According to a surface treatment method for achieving hydrophilization which has hitherto been proposed, for example, etching treatment and plasma treatment, though the surface is highly hydrophilized, its effect is temporary, and the hydrophilized state cannot be maintained over a long period of time. Further, a surface-hydrophilic coating film using a hydrophilic graft polymer as one of hydrophilic resins is also proposed (see, for example, non-patent document 1). However, though this coating film has hydrophilicity to some extent, it cannot be said that the compatibility with a substrate is sufficient, and high durability has been demanded.

Also, a film using titanium oxide has hitherto been known as a film with excellent surface hydrophilicity. For example, a technique for forming a photocatalyst-containing layer on the surface of a substrate to highly hydrophilize the surface corresponding to optical excitation of the photocatalyst is disclosed. It is reported that, when this technique is applied to various composite materials such as glasses, lenses, mirrors, exterior materials, and wet area materials, excellent antifouling properties can be imparted to such composite materials (see, for example, patent document 5). However, a hydrophilic film using titanium oxide does not have sufficient film strength and, unless it is optically excited, it does not exhibit a hydrophilizing effect. Thus, there is involved a problem that a use site thereof is limited. Therefore, an antifouling member having durability and good wear resistance has been demanded.

On the other hand, it has been studied to use, in a paint for automobiles, industrial machines, steel-made furniture, interiors and exteriors of buildings, household appliances, plastic products, etc., a blend system of a hydrolyzable silyl group-having vinyl copolymer and an acryl polyol; a copolymer between a hydrloyzable silyl group-having vinyl monomer and an alcoholic hydroxyl group-having vinyl monomer; and the like (see, for example, patent document 6). Use of this paint enables one to form a coating film having excellent acid resistance and weatherability. However, this paint forms a coating film with such a low hydrophilicity that it is difficult to remove the adherent stain. Thus, in view of apparent beauty, ease of cleaning, reduction of the number of cleaning times, improvement of antifouling properties has been desired. It has been proposed to after-treat the coating film with steam or the like in order to solve the above-mentioned problems, but sufficient hydrophilicity has not yet been obtained.

In order to solve the foregoing problems, it has been proposed to hybridize a polymer having a high hydrophilicity with a sol-gel (see, for example, patent document 7). The coating film formed by this process has such a high hydrophilicity that it shows good antifouling properties, and has such a high hardness that it shows good scratch resistance. However, hybridization with a sol-gel imparts a large negative charge, which causes a problem that stains are easily attracted.

[Patent document 1] JP-A-64-86101
[Patent Document 2] JP-A-4-338901
[Patent Document 3] JP-B-6-29332
[Patent Document 4] JP-A-7-16940
[Patent Document 5] WO96/29375
[Patent Document 6] JP-A-63-132977
[Patent Document 7] JP-A-2002-361800
[Non-patent Document 1] Article of The Chemical Daily News, dated Jan. 30, 1995).

### DISCLOSURE OF THE INVENTION

### PROBLEMS THAT THE INVENTION IS TO SOLVE

The present invention has been made in consideration of the above-mentioned circumstances, and an object of the invention is to provide a hydrophilic composition capable of forming a hydrophilic coating film having high scratch resistance and antifouling properties without hybridizing with a sol-gel.

### MEANS FOR SOLVING THE PROBLEMS

As a result of intensive investigations, the inventors have found that, when a hydrophilic polymer having a specific hydrolyzable silyl group is selected, the above-mentioned problems can be solved. That is, the inventors have found that a hydrophilic coating film having high scratch resistance and antifouling properties can be formed, thus having achieved the invention.
The invention is as follows.

1. A hydrophilic composition containing: a hydrophilic polymer (A) having two or more hydrolyzable silyl groups per molecule; and a catalyst (B), with the surface zeta potential of a coating film obtained by coating and drying the hydrophilic composition being from -15 mV to +10 mV.
2. The hydrophilic composition as described in 1 above, wherein the hydrophilic polymer (A) contains a structure represented by the following formula (I):

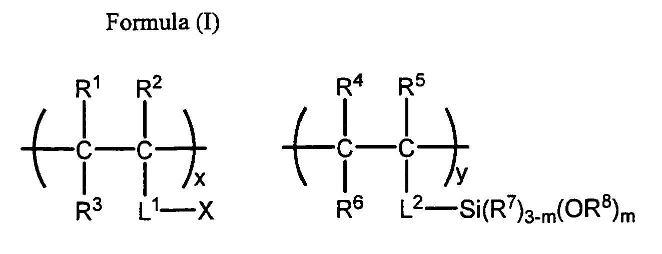

In the formula (I), R¹ to R⁸ each independently represents a hydrogen atom or a hydrocarbon group. L¹ represents a single bond or a multi-valent organic linking group. L² represents a single bond or a multi-valent organic linking group having one or more structures selected from the group consisting of -CONH-, -NHCONH-, -OCONH-, -SO₂NH-, and -SO₃-. m represents an integer of from 1 to 3. x and y each represents a composition ratio, with x being 0<x<100 and y being 0<y<100. X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ). Here, Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and Rg represents a straight, branched or cyclic alkyl group, a halogen atom, an inorganic anion or an organic anion.
3. The hydrophilic composition as described in 1 or 2 above, wherein the surface zeta potential of the coating film formed by coating and drying the hydrophilic composition is from -10 mV to 0 mV.
4. The hydrophilic composition as described in any one of 1 to 3 above, wherein the catalyst (B) includes at least one member selected from the group consisting of acids, alkalis, metal chelates, and metal salts.
5. The hydrophilic composition as described in any one of 1 to 4 above, which contains the catalyst (B) in an amount of from 0.1 to 20 parts by mass per 100 parts by mass of the hydrophilic polymer (A) having two or more hydrolyzable silyl groups per molecule.
6. The hydrophilic composition as described in any one of 1 to 5 above, wherein the coating film obtained by coating and drying the hydrophilic composition has a contact angle to water of 15° or less.
7. The hydrophilic composition described in any one of 1 to 6 above, wherein the coating film obtained by coating and drying the hydrophilic composition has a contact angle to water of 10° or less.
8. The hydrophilic composition as described in any one of 1 to 7 above, which further contains a hydrophilic polymer (C) having one hydrolyzable silyl group per molecule.
9. The hydrophilic composition as described in 8 above, wherein the mass ratio of the hydrophilic polymer (A) to the hydrophilic polymer (C) (hydrophilic polymer (A)/hydrophilic polymer (C)) is within the range of from 5/95 to 50/50.
10. A fin member containing a fin body; and a hydrophilic layer provided on at least a part of the surface of the fin body, wherein the hydrophilic layer is formed by coating and drying the hydrophilic composition as described in any one of 1 to 9 above.
11. The fin member as described in 10 above, wherein the fin body is made of aluminum.
12. A heat exchanger having the fin member as described in 11 above.
13. An air-conditioner having the heat exchanger as described in 12 above.

### ADVANTAGE OF THE INVENTION

According to the present invention, there can be provided a hydrophilic composition which can form a hydrophilic coating film having high scratch resistance and antifouling properties without hybridization with a sol-gel.

### BEST MODE FOR CARRYING OUT THE INVENTION

The present invention relates to a hydrophilic composition which contains a hydrophilic polymer (A) having two or more hydrolyzable silyl groups per molecule and a catalyst (B) and which forms, when coated and dried, a coating film having a surface zeta potential of from -15 mV to +10 mV. The subject of the invention has been achieved by optimizing formulation of the hydrophilic composition and optimally controlling the surface zeta potential.

The surface zeta potential can be used as an indication for electric charge or adsorption characteristics of the surface of a solid body. When the zeta potential of the surface of a solid body and the zeta potential of the surface of a particular substance have different signs of plus sign and minus sign, the electrostatic attractive force between them increases as the difference thereof in zeta potential becomes larger, thus the particular substance more tending to adhere to the surface of a solid body. Accordingly, in the case where it is required for a particular substance not to readily adhere to the surface of a solid body, it is desired to adjust the surface zeta potential of the solid body to the vicinity of 0.
Therefore, in order to maintain high hydrophilicity for a long period of time without adhesion of stains, it is desirable to adjust the surface zeta potential to the vicinity of 0, with the case being particularly preferred wherein the surface zeta potential is in the range of from -15 mV to 10 mV. Also, since many pollutants in indoor environment have minus charge, the surface zeta potential is preferably minus, more preferably from -10 mV to 0 mV. Adjustment of the surface zeta potential can be generally conducted by adding an additive having charge, but this technique involves the risk of reduction of hydrophilicity. However, it becomes possible to adjust the surface zeta potential with maintaining hydrophilicity, by changing functional groups of the hydrophilic polymer of the invention. Specifically, when a cationic functional group is selected as the functional group, the surface zeta potential becomes plus whereas, when an anionic functional group is selected, the surface zeta potential becomes minus. When a nonionic functional group is selected, the surface zeta potential is in the vicinity of zero.
Also, the absolute value of the surface zeta potential can be changed by changing the amount of the functional group.
The surface zeta potential can be calculated by measuring the electroosmotic flow at 25°C/pH7 using a laser zeta potentiometer (manufactured by Otsuka Electronics Co., Ltd.; ELS-Z2), a cell for a platy sample, and standard particles of polystyrene-made latex particles coated with hydroxypropyl cellulose having a known zeta potential and dispersed in an appropriate amount in an aqueous solution containing 10 mmol/dm³ NaCl electrolyte.

The hydrophilic polymer (A) and the catalyst (B) contained in the hydrophilic composition of the invention will be described below.

### [Hydrophilic polymer (A)]

The main chain structure of the hydrophilic polymer (A) is not particularly limited. As preferred main chain structures, there are illustrated an acrylic resin, a methacrylic resin, a polyvinylacetal resin, a polyurethane resin, a polyurea resin, a polyimide resin, a polyamide resin, an epoxy resin, a polystyrene resin, a novolak phenol resin, a polyester resin, a synthetic rubber, and a natural rubber, with an acrylic resin and a methacrylic resin being particularly preferred. The hydrophilic polymer may be a copolymer, and the copolymer may be any of random copolymer, block copolymer, and graft copolymer.

The hydrophilic polymer has a hydrophilic group. As the hydrophilic group, there is illustrated, for example, -NHCOR,-NHCO₂R, -NHCONR₂, -CONH₂, -NR₂, -CONR₂, -OCONR₂, -COR, -OH, -OR, -OM, -CO₂M, -CO₂R, -SO₃M, -OSO₃M, -SO₂R, -NHSO₂R, -SO₂NR₂, -PO₃M, -OPO₃M, -(CH₂CH₂O)ₙH, -(CH₂CH₂O)ₙCH₃, or -NR₃Z¹, provided that, when plural Rs exist, they may be the same or different, and each represents a hydrogen atom, an alkyl group (preferably a straight, branched or cyclic alkyl group containing from 1 to 18 carbon atoms), an aryl group, or an aralkyl group. M represents a hydrogen atom, an alkyl group, an alkali metal, an alkaline earth metal, or onium, n represents an integer (preferably an integer of from 1 to 100), and Z¹ represents a halogen ion. Also, when plural Rs exist as in -CONR₂, Rs may be connected to each other to form a ring, and the formed ring may be a heterocyclic ring containing a hetero atom such as an oxygen atom, a sulfur atom or a nitrogen atom. R may further have a substituent and, as the substituent, there can similarly be illustrated those which will be illustrated hereinafter as substituents introducible in the case where R¹ and R² in the hydrophilic polymer having a structure represented by the formula (I) are alkyl groups.

Specifically, as R, there are preferably illustrated a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group. Also, as M, there is illustrated a hydrogen atom; an alkali metal such as lithium, sodium or potassium; an alkaline earth metal such as calcium or barium; or onium such as ammonium, iodonium or sulfonium.

As the hydrophilic group, -OH, -NHCOCH₃, -CONH₂, -CON(CH₃)₂, -COOH, -SO₃⁻NMe₄⁺, -SO₃⁻K⁺, ₋(CH₂CH₂O)ₙH, a morpholyl group, etc. are preferred. -OH, -NHCOCH₃, -CONH₂, -CON(CH₃)₂, -COOH, -SO₃⁻K⁺, and -(CH₂CH₂O)ₙH are more preferred, and -OH, -COOH; and -CONH₂ are still more preferred.

The hydrophilic polymer (A) which can be used in the invention is preferably a polymer having the structural units represented by the following formulae (I-a) and (I-b) (in some cases, also referred to as a particular hydrophilic polymer).

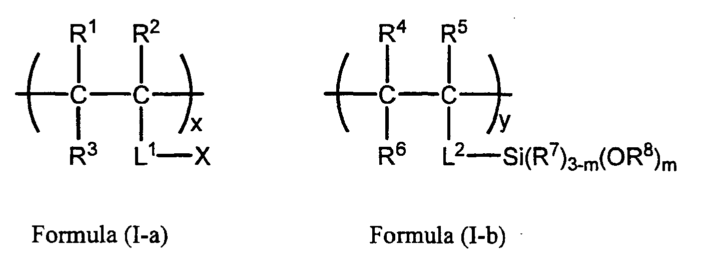

In the formulae (I-a) and (I-b), R¹ to R⁸ each independently represents a hydrogen atom or a hydrocarbon group (containing preferably 8 or less carbon atoms). L¹ represents a single bond or a multi-valent organic linking group. L² represents a single bond or a multi-valent organic linking group having one or more structures selected from the group consisting of -CONH-, -NHCONH-, -OCONH-, -SO₂NH-, and -SO₃-. m represents an integer of from 1 to 3. x and y each represents a composition ratio, with x being 0<x<100 and y being 0<y<100. X represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ). Here, Rₐ, R_{b}, and R_{c} each independently represents a hydrogen atom or a straight, branched or cyclic alkyl group (containing preferably from1 to 8 carbon atoms), R_{d} represents a straight, branched or cyclic alkyl group (containing preferably from 1 to 8 carbon atoms), Rₑ and R_{f} each independently represents a hydrogen atom, a straight, branched or cyclic alkyl group (containing preferably from 1 to 8 carbon atoms), an alkali metal, an alkaline earth metal or an onium, and R_{g} represents a straight, branched or cyclic alkyl group (containing preferably from 1 to 8 carbon atoms), a halogen atom, an inorganic anion or an organic anion.

As a hydrocarbon group in the case where R¹ to R⁸ each represents a hydrocarbon group, there are illustrated an alkyl group, an aryl group, etc., with a straight, branched or cyclic alkyl group containing from 1 to 8 carbon atoms being preferred. Specifically, there are illustrated a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
In view of effectiveness and availability, R¹ to R⁸ each preferably is a hydrogen atom, a methyl group or ethyl group.

These hydrocarbon groups may further have a substituent. When the alkyl group has a substituent, the substituted alkyl group is constituted by the substitute and an alkylene group connected to each other and, as the substituent, a monovalent non-metallic atom group except for a hydrogen atom is used. Preferred examples thereof include a halogen atom (-F, -Br, -Cl or -I), a hydroxyl group, an alkoxy group, an aryloxy group, a mercapto group, an alkylthio group, an arylthio group, an alkyldithio group, an aryldithio group, an amino group, an N-alkylamino group, an N,N-diarylamino group, an N-alkyl-N-arylamino group, an acyloxy group, a carbamoyloxy group, an N-alkylcarbamoyloxy group, an N-arylcarbamoyloxy group, an N,N-dialkylcarbamoyloxy group, an N,N-diarylcarbamoyloxy group, an N-alkyl-N-arylcarbamoyloxy group, an alkylsulfoxy group, an arylsulfoxy group, an acylthio group, an acylamino group, an N-alkylacylamino group, an N-arylacylamino group, a ureido group, an N'-alkylureido group, an N',N'-dialkylureido group, an N'-arylureido group, an N',N'-diarylureido group, an N'-alkyl-N'-arylureido group, an N-alkylureido group, an N-arylureido group, an N'-alkyl-N-alkylureido group, an N'-alkyl-N-arylureido group, an N',N'-dialkyl-N-alkylureido group, an N',N'-dialkyl-N-arylureido group, an N'-aryl-N-alkylureido group, an N'-aryl-N-arylureido group, an N',N'-diaryl-N-alkylureido group, an N',N'-diaryl-N-arylureido group, an N'-alkyl-N'-aryl-N-alkylureido group, an N'-alkyl-N'-aryl-N-arylureido group, an alkoxycarbonylamino group, an aryloxycarbonylamino group, an N-alkyl-N-alkoxycarbonylamino group, an N-alkyl-N-aryloxycarbonylamino group, an N-aryl-N-alkoxycarbonylamino group, an N-aryl-N-aryloxycarbonylamino group, a formyl group, an acyl group, a carboxyl group, an alkoxycarbonyl group,

an aryloxycarbonyl group, a carbamoyl group, an N-alkylcarbamoyl group, an N,N-dialkylcarbamoyl group, an N-arylcarbamoyl group, an N,N-diarylcarbamoyl group, an N-alkyl-N-arylcarbamoyl group, an alkylsulfinyl group, an arylsulfinyl group, an alkylsulfonyl group, anarylsulfonyl group, a sulfo group (-SO₃H) and a conjugate base group thereof (hereinafter referred to as a sulfonato group), an alkoxysulfonyl group, an aryloxysulfonyl group, a sulfinamoyl group, an N-alkylsulfinamoyl group, an N,N-dialkylsulfinamoyl group, an N-arylsulfinamoyl group, an N,N-diarylsulfinamoyl group, an N-alkyl-N-arylsulfinamoyl group, a sulfamoyl group, an N-alkylsulfamoyl group, an N,N-dialkylsulfamoyl group, an N-arylsulfamoyl group, an N,N-diarylsulfamoyl group, an N-alkyl-N-arylsulfamoyl group, a phosphono group (-PO₃H₂) and a conjugate base group thereof (hereinafter referred to as a phosphonato group), a dialkylphosphono group (-PO₃(alkyl)₂), a diarylphosphono group (-PO₃(aryl)₂), an alkylarylphosphono group (-PO₃(alkyl)(aryl)), a monoalkylphosphono group (-PO₃H(alkyl)) and a conjugate base group thereof (hereinafter referred to as an alkylphosphonato group), a monoarylphosphono group (-PO₃H(aryl)) and a conjugate base group thereof (hereinafter referred to as an arylphosphonato group), a phosphonoxy group (-OPO₃H₂) and a conjugate base group thereof (hereinafter referred to as a phosphonatoxy group), a dialkylphosphonoxy group (-OPO₃(alkyl)₂), a diarylphosphonoxy group (-OPO₃(aryl)₂), an alkylarylphosphonoxy group (-OPO(alkyl)(aryl)), a monoalkylphosphonoxy group (-OPO₃H(alkyl)) and a conjugate base group thereof (hereinafter referred to as an alkylphosphonatoxy group), a monoarylphosphonoxy group (-OPO₃H(aryl)) and a conjugate base group thereof (hereinafter referred to as an arylphosphonatoxy group), a morpholino group, a cyano group, a nitro group, an aryl group, an alkenyl group, and an alkynyl group.

As specific examples of the alkyl group in these substituents, there are similarly illustrated those alkyl groups which have been illustrated hereinbefore with respect to R¹ to R⁸ and, as specific examples of the aryl group, there can be illustrated a phenyl group, a biphenyl group, a naphthyl group, a tolyl group, a xylyl group, a mesityl group, a cumenyl group, a chlorophenyl group, a bromophenyl group, a chloromethylphenyl group, a hydroxyphenyl group, a methoxyphenyl group, an ethoxyphenyl group, a phenoxyphenyl group, an acetoxyphenyl group, a benzoyloxyphenyl group, a methylthiophenyl group, a phenylthiophenyl group, a methylaminophenyl group, a dimethylaminophenyl group, an acetylaminophenyl group, a carboxyphenyl group, a methoxycarbonylphenyl group, an ethoxyphenylcarbonyl group, a phenoxycarbonylphenyl group, an N-phenylcarbamoylphenyl group, a phenyl group, a cyanophenyl group, a sulfophenyl group, a sulfonatophenyl group, a phosphonophenyl group, and a phosphonatophenyl group. Also, as examples of the alkenyl group, there are illustrated a vinyl group, a 1-propenyl group, a 1-butenyl group, a cinnamyl group, and a 2-chloro-1-ethenyl group and, as examples of the alkynyl group, there are illustrated an ethynyl group, a 1-propynyl group, a 1-butynyl group, and a trimethylsilylethynyl group. As G¹ in the acyl group (G¹CO-), there can be illustrated a hydrogen, and the above-described alkyl groups and aryl groups.

Of these substituents, a halogen atom (-F, -Br, -Cl or -I), an alkoxy group, an aryloxy group, an alkylthio group, an arylthio group, an N-alkylamino group, an N,N-dialkylamino group, an acyloxy group, an N-alkylcarbamoyloxy group, an N-arylcarbamoyloxy group, an acylamino group, a formyl group, an acyl group, a carboxyl group, an alkoxycarbonyl group, an aryloxycarbonyl group, a carbamoyl group, an N-alkylcarbamoyl group, an N,N-dialkylcarbamoyl group, an N-arylcarbamoyl group, an N-alkyl-N-arylcarbamoyl group, a sulfo group, a sulfonato group, a sulfamoyl group, an N-alkylsulfamoyl group, an N,N-dialkylsulfamoyl group, an N-arylsulfamoyl group, an N-alkyl-N-arylsulfamoyl group, a phosphono group, a phosphonato group, a dialkylphosphono group, a diarylphosphono group, a monoalkylphosphono group, an alkylphosphonato group, a monoarylphosphono group, an arylphosphonato group, a phosphonoxy group, a phosphonatoxy group, an aryl group, and an alkenyl group are more preferred.

On the other hand, as the alkylene group in the substituted alkyl group, there can be illustrated those which are formed by removing any one of the hydrogen atoms of the aforesaid alkyl group containing from 1 to 20 carbon atoms to leave a divalent organic residue and, preferably, there can be illustrated straight alkylene groups containing from 1 to 12 carbon atoms, branched alkylene groups containing from 3 to 12 carbon atoms, and cyclic alkylene groups containing from 5 to 10 carbon atoms. As preferred specific examples of the substituted alkyl group obtained by combining the substituent and the alkylene group, there can be illustrated a hydroxymethyl group, a chloromethyl group, a bromomethyl group, a 2-chloroethyl group, a trifluoromethyl group, a methoxymethyl group, a methoxyethoxyethyl group, an allyloxymethyl group, a phenoxymethyl group, a methylthiomethyl group, a tolylthiomethyl group, an ethylaminoethyl group, a diethylaminopropyl group, a morpholinopropyl group, an acetyloxymethyl group, a benzoyloxymethyl group, an N-cyclohexylcarbamoyloxyethyl group, an N-phenylcarbamoyloxyethyl group, an acetylaminoethyl group, an N-methylbenzoylaminopropyl group, a 2-hydroxyethyl group, a 2-hydroxypropyl group, a carboxypropyl group, a methoxycarbonylethyl group, an allyloxycarbonylbutyl group,

a chlorophenoxycarbonylmethyl group, a carbamoylmethyl group, an N-methylcarbamoylethyl group, an N,N-dipropylcarbamoylmethyl group, an N-(methoxyphenyl)carbamoylethyl group, an N-methyl-N-(sulfophenyl)carbamoylmethyl group, a sulfobutyl group, a sulfonatobutyl group, a sulfamoylbutyl group, an N-ethylsulfamoylmethyl group, an N,N-dipropylsulfamoylpropyl group, an N-tolylsulfamoylpropyl group, an N-methyl-N-(phosphonophenyl)sulfamoyloctyl group, a phosphonobutyl group, a phosphonatohexyl group, a diethylphosphonobutyl group, a diphenylphosphonopropyl group, a methylphosphonobutyl group, a methylphosphonatobutyl group, a tolylphosphonohexyl group, a tolylphosphonatohexyl group, a phosphonoxypropyl group, a phosphonatoxybutyl group, a benzyl group, a phenethyl group, an α-methylbenzyl group, a 1-methyl-1-phenylethyl group, a p-methylbenzyl group, a cinnamyl group, an allyl group, a 1-propenylmethyl group, a 2-butenyl group, a 2-methylallyl group, a 2-methylpropenylmethyl group, a 2-propynyl group, a 2-butynyl group, and a 3-butynyl group. In view of hydrophilicity, a hydroxymethyl group is particularly preferred.

L¹ represents a single bond or a multi-valent organic linking group. Here, the term "single bond" means that the main chain of the polymer and X are directly connected to each other without any linking chain. Further, the term "organic linking group" means a linking group consisting of non-metallic atoms, specifically a group consisting of from 0 to 200 carbon atoms, from 0 to 150 nitrogen atoms, from 0 to 200 oxygen atoms, from 0 to 400 hydrogen atoms, and from 0 to 100 sulfur atoms. As more specific linking group, there can be illustrated the following structural units or those which are constituted by a combination thereof.

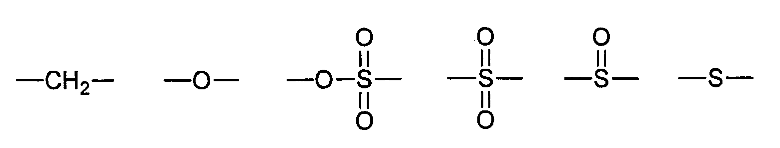

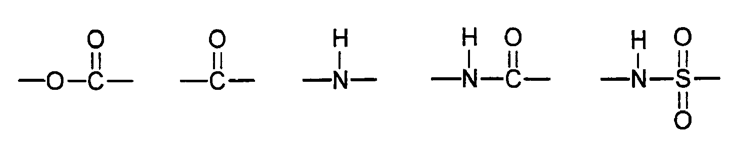

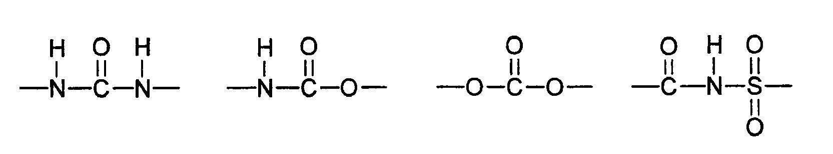

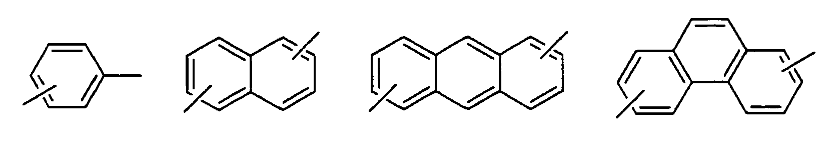

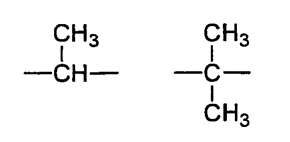

More preferred are -CH₂CH₂CH₂S-, -CH₂S-, -CONHCH(CH₃)CH₂-, -CONH-, -CO-, -CO₂- and -CH₂-.
Also, L¹ may be formed by a polymer or an oligomer. Specifically, L¹ preferably includes those which comprise an unsaturated double bond-containing monomer, such as polyacrylate, polymethacrylate, polyacrylonitrile, polyvinyl, and polystyrene. As other preferred examples, there are illustrated poly(oxyalkylene), polyurethane, polyurea, polyester, polyamide, polyimide, polycarbonate, polyamino acid, and polysiloxane, preferably polyacrylate, polymethacrylate, polyacrylonitrile, polyvinyl, and polystyrene and, more preferably, polyacrylate and polymethacrylate.
The structural units used in these polymers and oligomers may be of one kind or of two or more kinds. Also, in the case where L¹ is a polymer or an oligomer, there exists no particular limit as to the number of elements constituting it, and the molecular weight is preferably from 1,000 to 1,000,000, more preferably from 1,000 to 500,000, most preferably from 1,000 to 200,000.

L² represents a single bond or a multi-valent organic linking group having one or more structures selected from the group consisting of -CONH-, -NHCONH-, -OCONH-, -SO₂NH-, and -SO₃-. Here, the term "single bond" means that the polymer main chain and Si atom are directly connected to each other without any linking group. Two or more of the aforesaid structures may exist in L² and, in such case, the structures may be the same as or different from each other. As long as L² contains one or more of the aforesaid structures, other part thereof may have the similar structure to those illustrated with respect to L¹.

Also, X is a hydrophilic group and represents -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ). Here, Rₐ, R_{b}, and R_{c} each independently represents a hydrogen atom or a straight, branched or cyclic alkyl group (containing preferably from 1 to 8 carbon atoms), R_{d} represents a straight, branched or cyclic alkyl group (containing preferably from 1 to 8 carbon atoms), Rₑ and R_{f} each independently represents a hydrogen atom, a straight, branched or cyclic alkyl group (containing preferably from 1 to 8 carbon atoms), an alkali metal, an alkaline earth metal or an onium, and Rg represents a straight, branched or cyclic alkyl group (containing preferably from 1 to 8 carbon atoms), a halogen atom, an inorganic anion or an organic anion. Also, with -CON(Rₐ)(R_{b}), -OCON(Rₐ)(R_{b}), -NHCON(Rₐ)(R_{b}), -SO₂N(Rₐ)(R_{b}), -PO₃(Rₑ)(R_{f}), -OPO₃(Rₑ)(R_{f}), -PO₂(R_{d})(Rₑ), -N(Rₐ)(R_{b})(R_{c}) or -N(Rₐ)(R_{b})(R_{c})(R_{g}), Rₐ to Rg may be connected to each other to form a ring, and the formed ring may be a heterocyclic ring containing a hetero atom such as an oxygen atom, a sulfur atom or a nitrogen atom. Rₐ to Rg may further have a substituent and, as the introducible substituent, there can similarly be illustrated those which have been illustrated hereinbefore as substituents introducible in the case where the aforesaid R¹ to R⁸ are alkyl groups.

As Rₐ, R_{b} or R_{c}, there are specifically illustrated preferably a hydrogen atom, a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
As R_{d}, there are specifically illustrated preferably a methyl group, an ethyl group, a propyl group, a butyl group, a pentyl group, a hexyl group, a heptyl group, an octyl group, an isopropyl group, an isobutyl group, a s-butyl group, a t-butyl group, an isopentyl group, a neopentyl group, a 1-methylbutyl group, an isohexyl group, a 2-ethylhexyl group, a 2-methylhexyl group, and a cyclopentyl group.
As Rₑ and R_{f}, there are specifically illustrated, in addition to the alkyl groups having been illustrated with respect to Rₐ to R_{d}, a hydrogen atom; an alkali metal such as lithium, sodium or potassium; an alkaline earth metal such as calcium or barium; or onium such as ammonium, iodonium or sulfonium. As R_{g}, there are specifically illustrated, in addition to the alkyl groups having been illustrated with respect to Rₐ to R_{d}, a hydrogen atom; a halogen atom such as a fluorine atom, a chlorine atom or a bromine atom; an inorganic anion such as nitrate anion, sulfate anion, tetrafluoroborate anion, or hexafluorophosphate anion; and an organic anion such as methanesulfonate anion, trifluoromethanesulfonate anion, nonafluorobutanesulfonate anion, or p-toluenesulfonate anion.
Also, as X, -CO₂⁻Na⁺, -CONH₂, -SO₃⁻Na⁺, -SO₂NH₂, -PO₃H₂, etc. are specifically preferred.

x and y each represents a composition ratio, with x being 0<x<100 and y being 0<y<100. x is preferably in the range of 10<x<99, more preferably in the range of 50<x<99. y is preferably in the range of 1<y<90, more preferably in the range of 1<y<50. By adjusting the molar ratio of each structural unit to this range, there can be obtained the effects of realizing high stability of a coating solution, high film strength and hydrophilicity. Measurement of the molar ratio of each structural unit can be conducted by means of a nuclear magnetic resonance apparatus (NMR) or by making a calibration curve using a standard substance and measuring with an infrared spectrophotometer.
Additionally, all of (I-a) units and all of (I-b) units which are the structural units constituting the polymer chain may respectively be the same or may contain different plural structural units and, in such case, the polymerization ratio of the structural units corresponding to the formula (I-a) to the structural units corresponding to the formula (I-b) is preferably in the above-mentioned range.

The molecular weight of the particular hydrophilic polymer (A) is preferably from 1,000 to 1,000,000, more preferably from 1,000 to 500,000, most preferably from 1,000 to 200,000.

The hydrolyzable silyl group which the hydrophilic polymer of the invention has is represented by the following formula (II).

-SiR⁷₃₋ₘ(OR⁸)ₘ (II)

In the above formula, R⁷ and R⁸ each independently represents a hydrogen atom or a hydrocarbon group containing from 1 to 8 carbon atoms, and m represents an integer of from 1 to 3.
By forming Si-O-Si bond as a result of condensation of silanol groups of a hydrolyzate of the hydrolyzable silyl group, there can be formed a strong film.

Specific examples of the particular hydrophilic polymer (A) will be described below together with the mass average molecular weight (M.W.) thereof. However, the invention is not limited only to them. Additionally, the polymers of the specific examples mean random copolymers which contain the respective structural units with the described molar ratio.

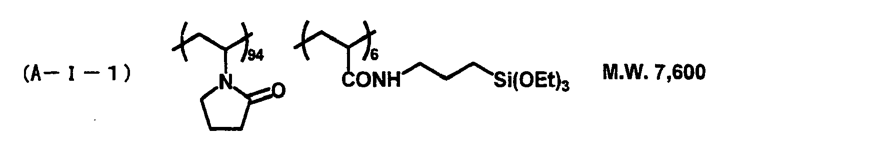

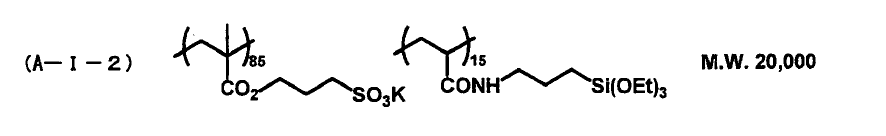

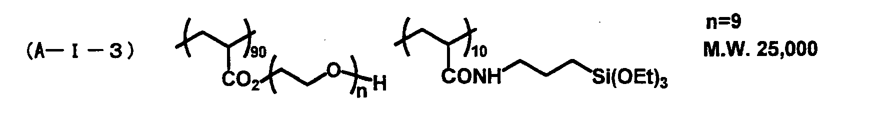

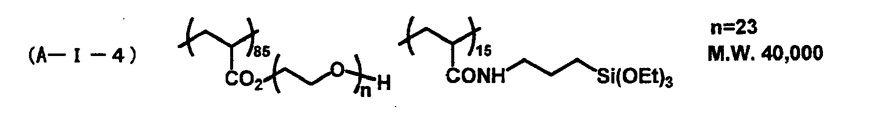

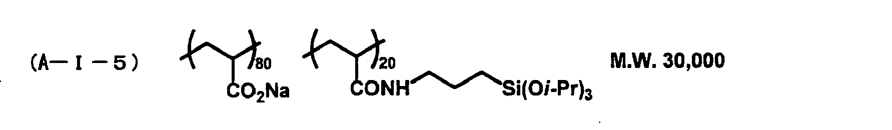

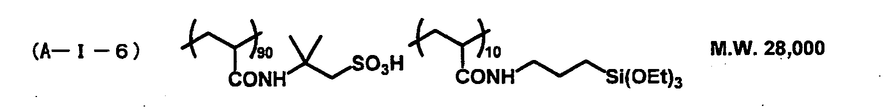

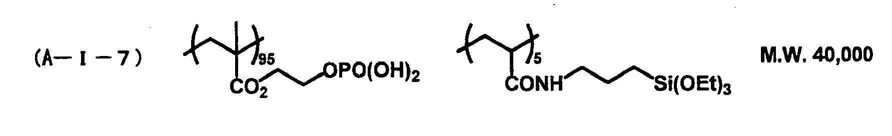

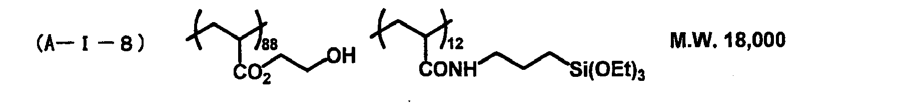

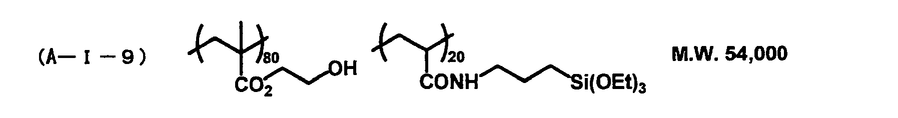

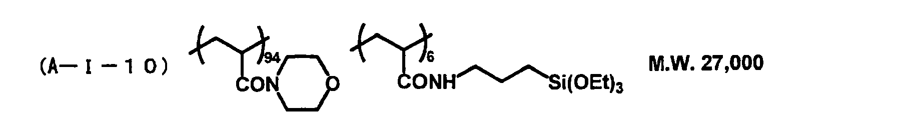

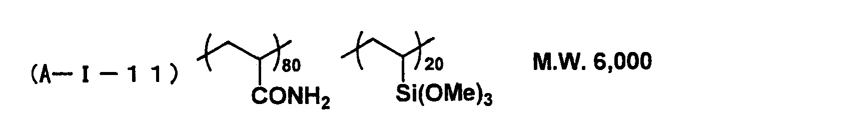

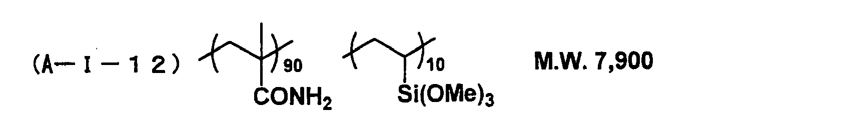

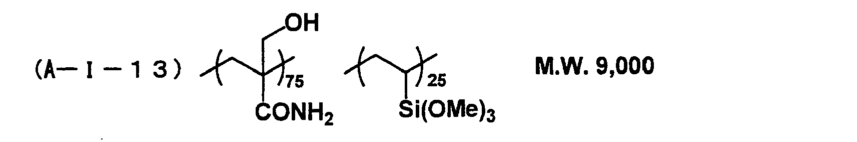

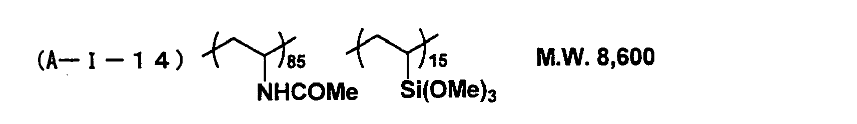

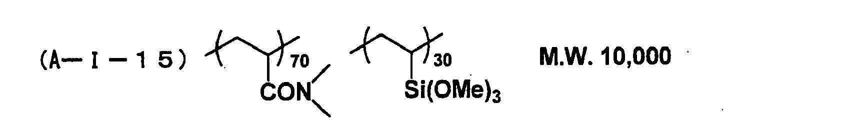

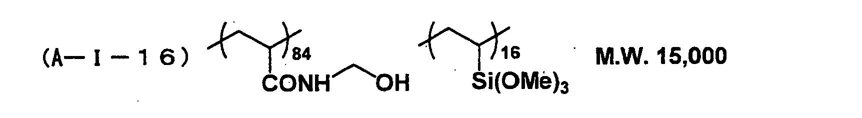

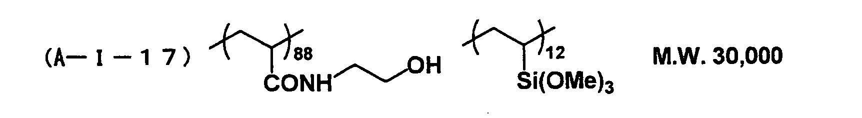

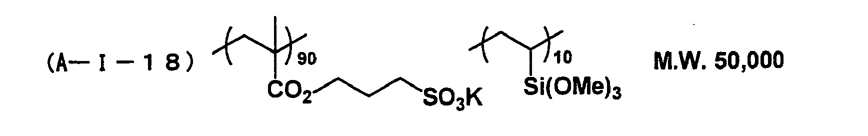

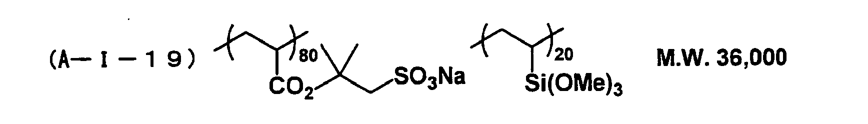

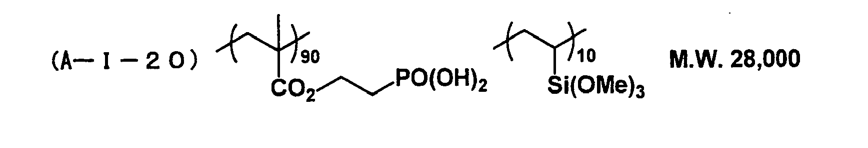

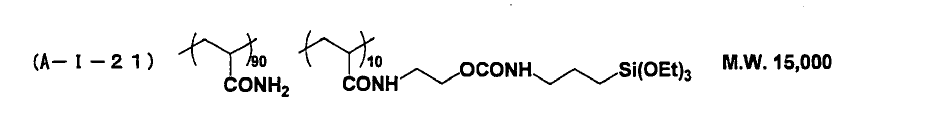

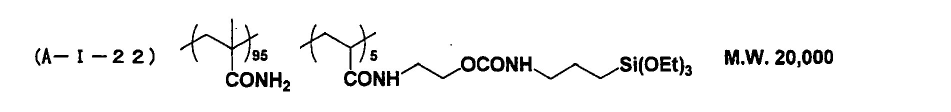

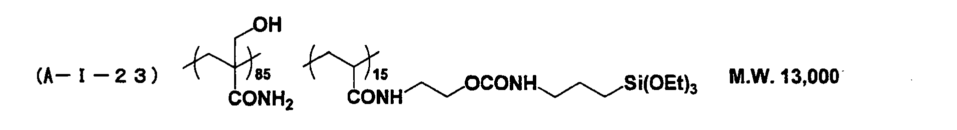

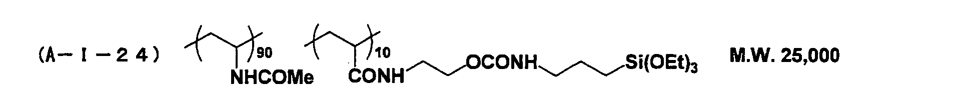

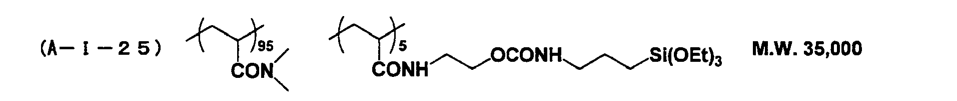

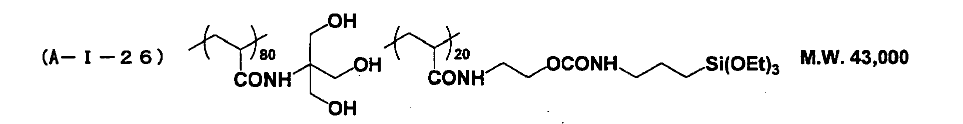

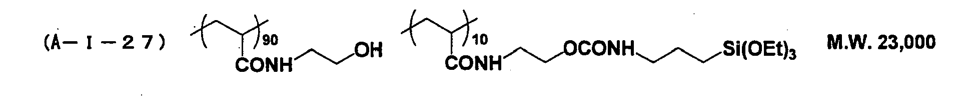

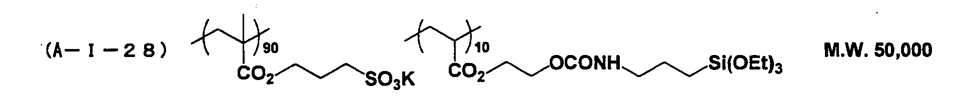

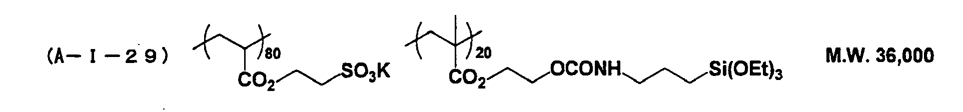

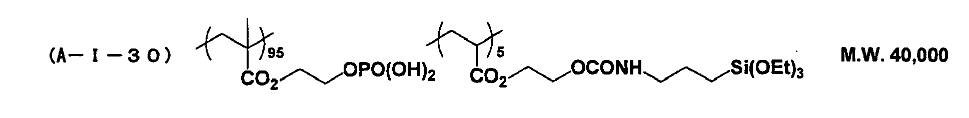

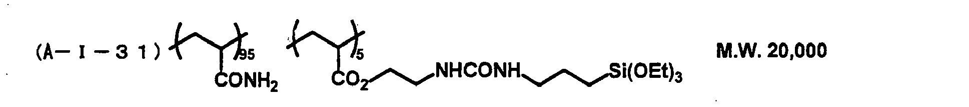

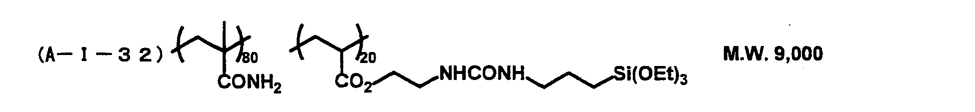

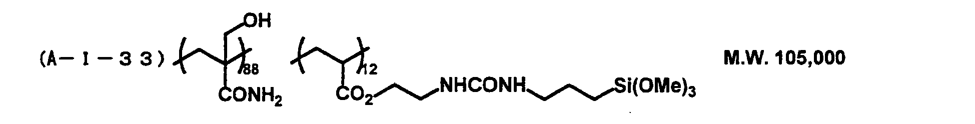

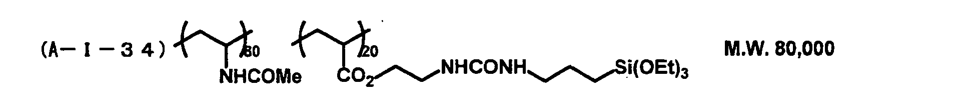

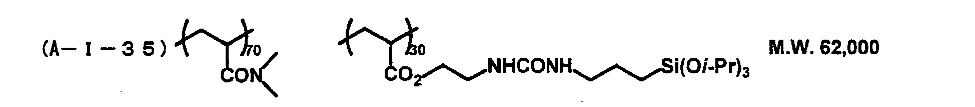

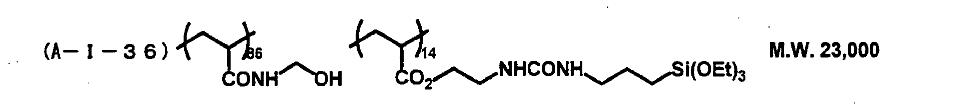

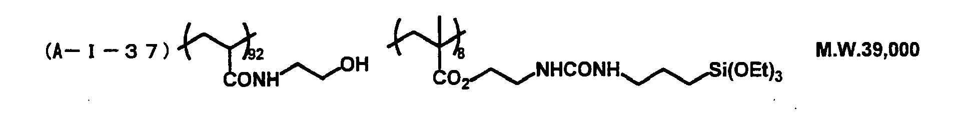

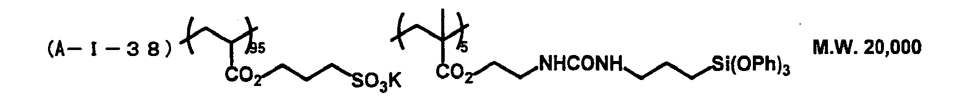

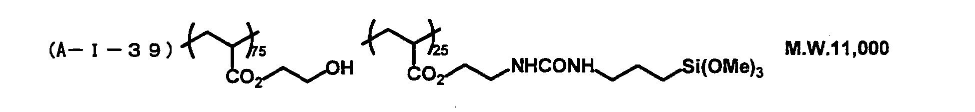

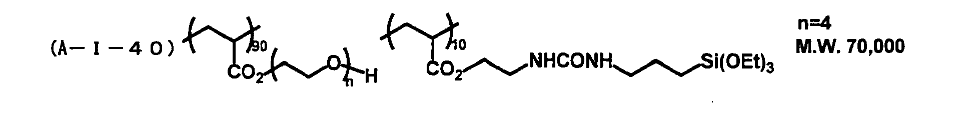

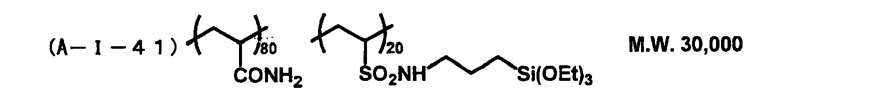

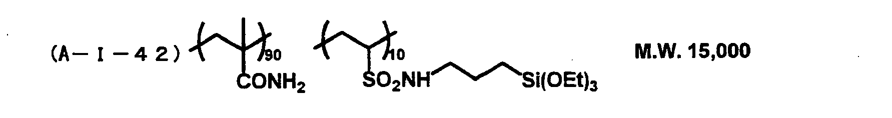

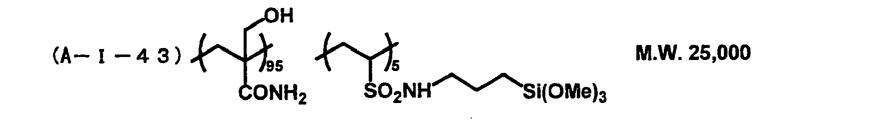

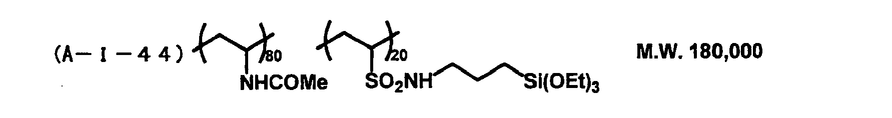

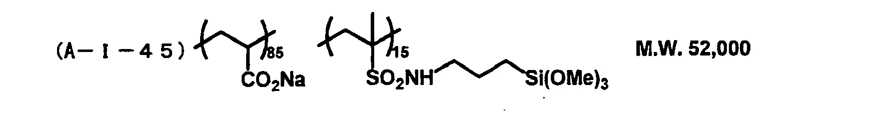

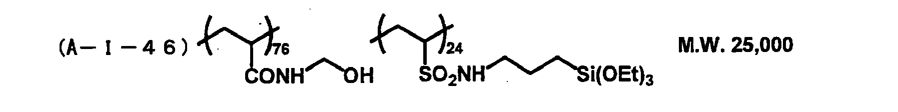

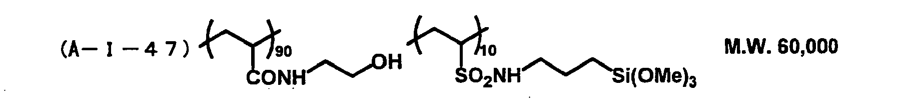

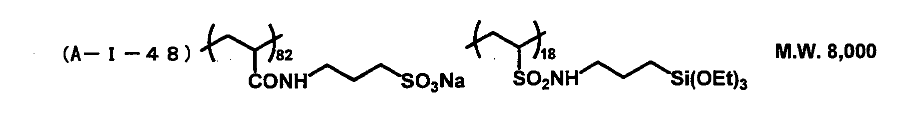

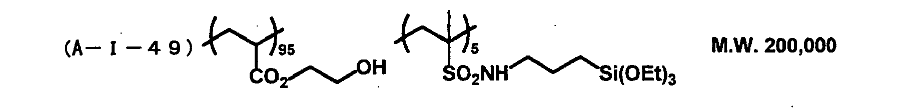

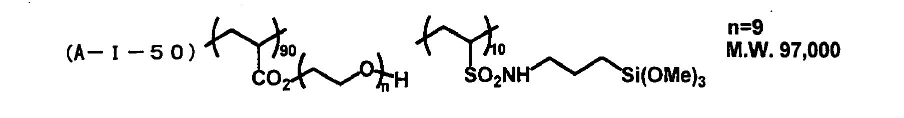

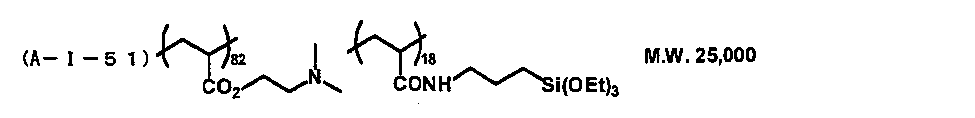

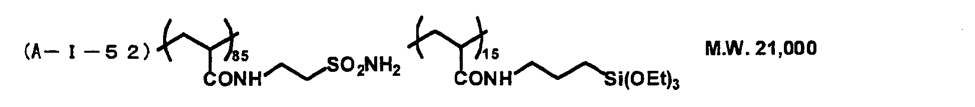

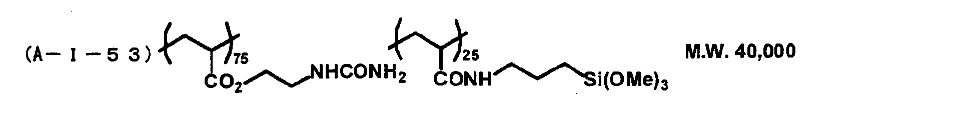

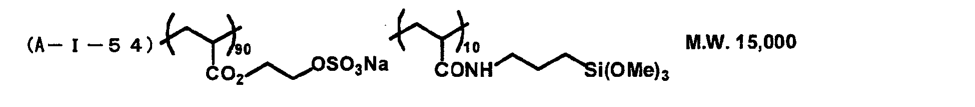

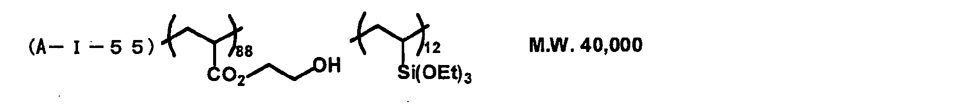

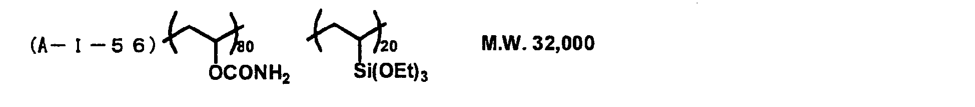

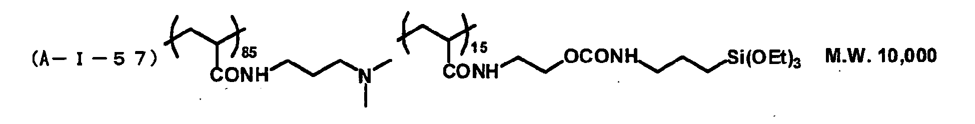

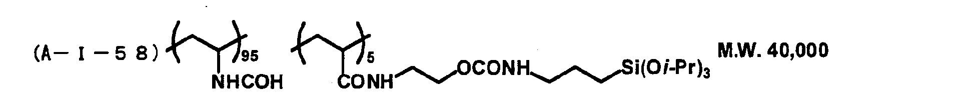

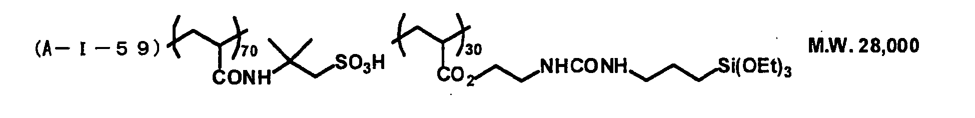

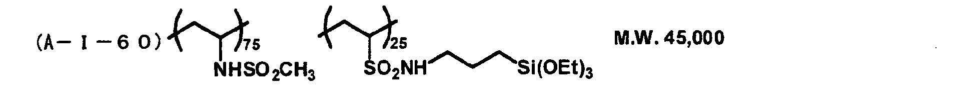

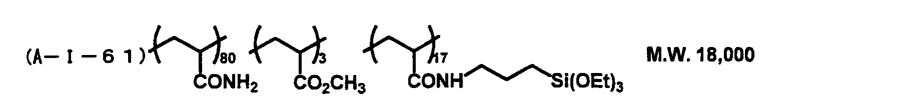

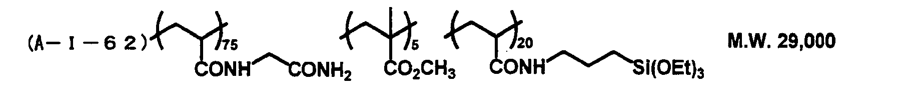

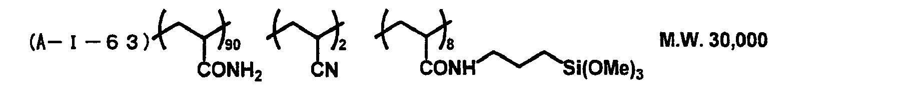

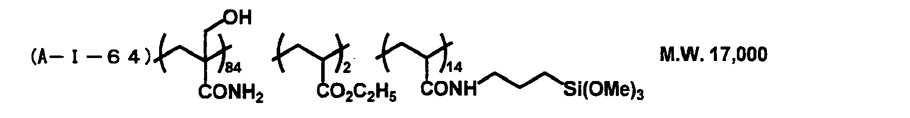

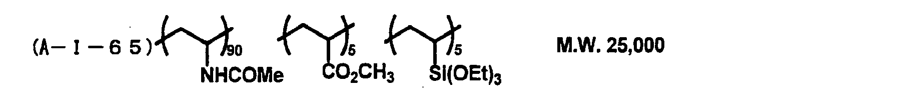

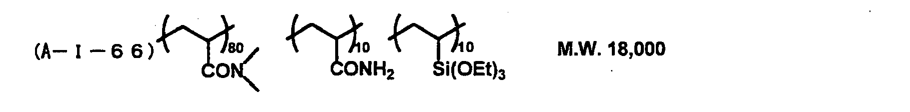

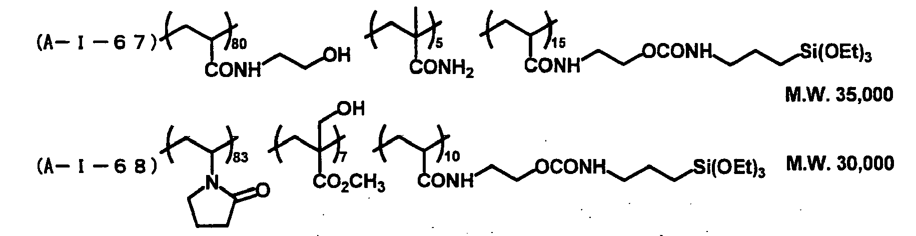

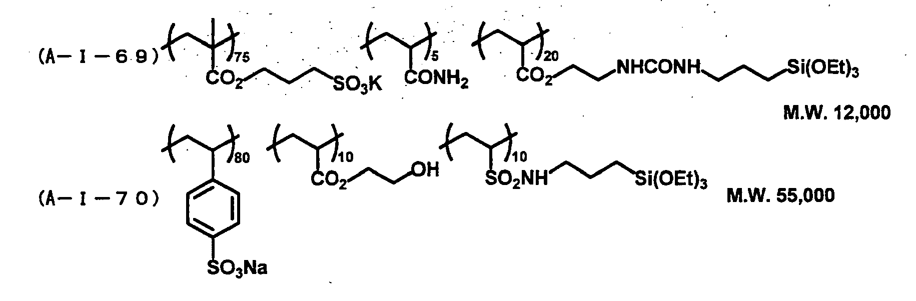

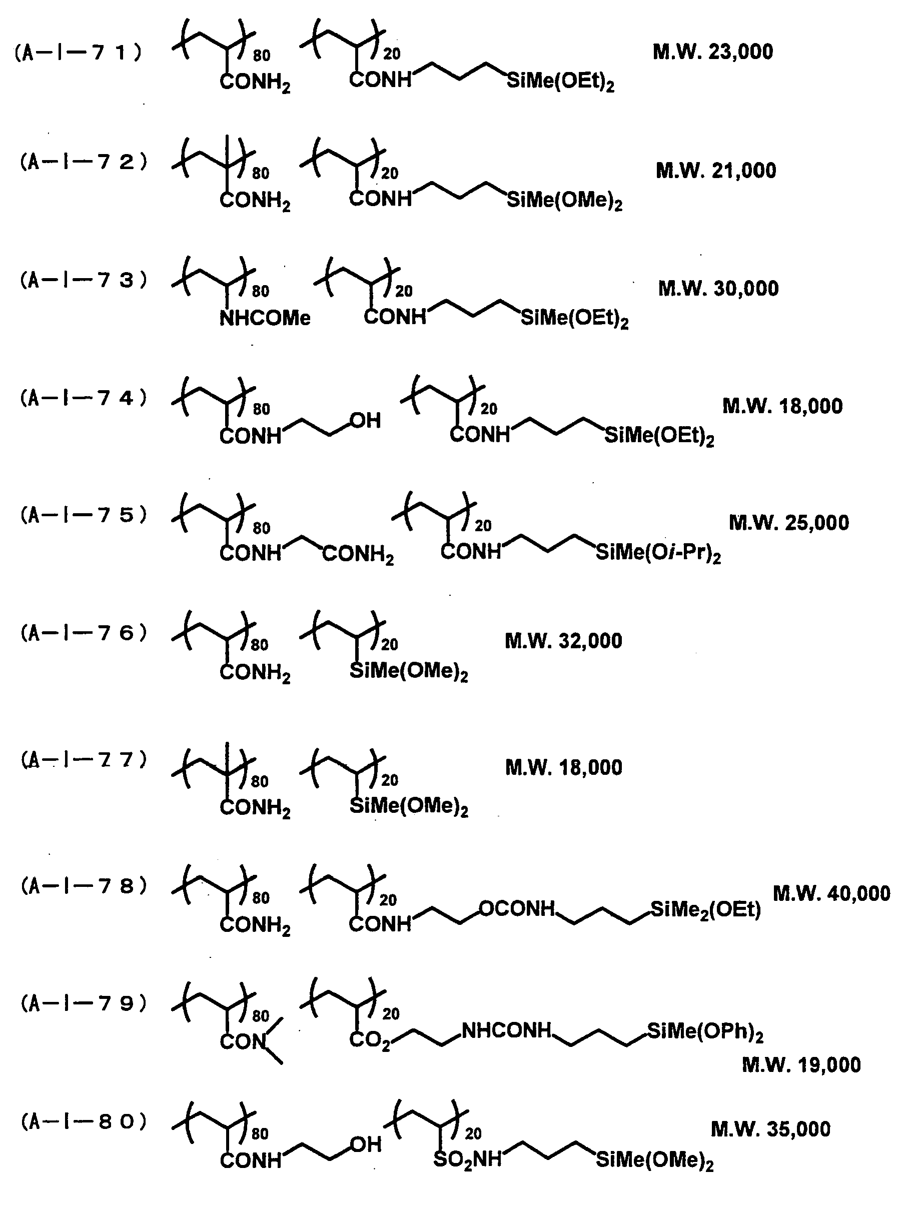

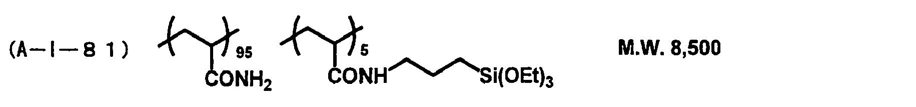

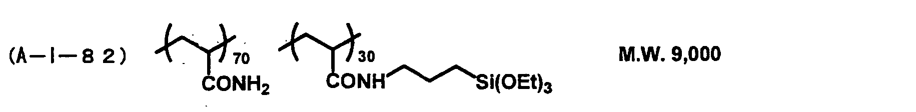

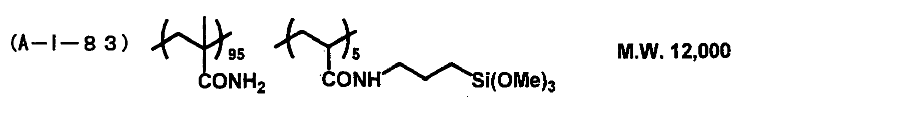

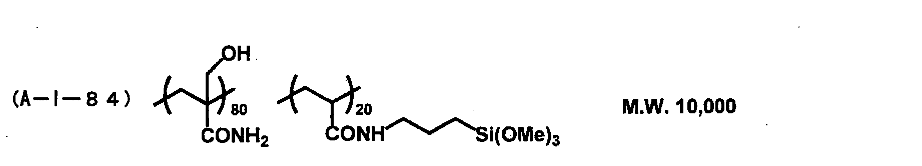

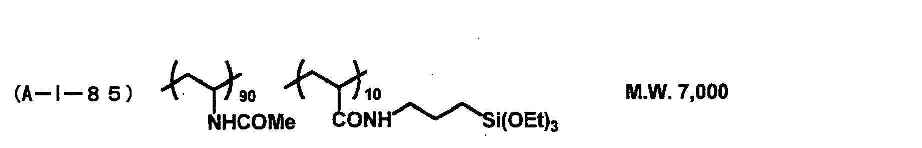

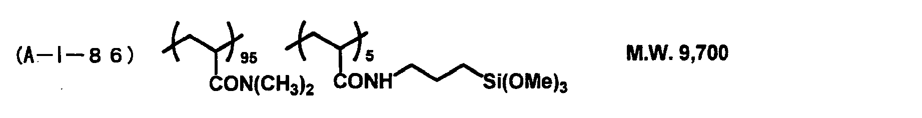

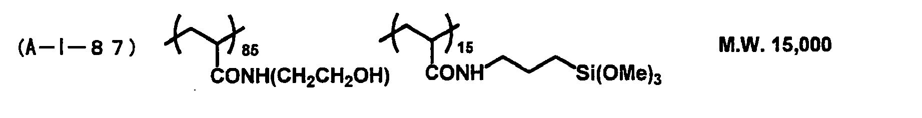

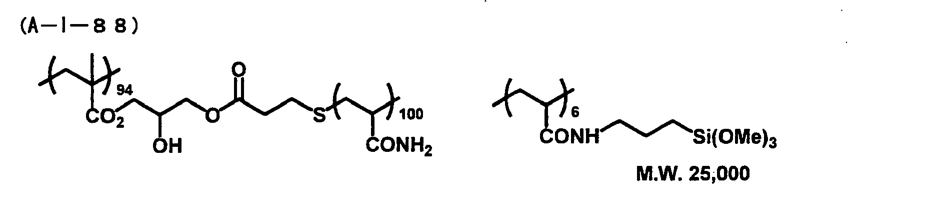

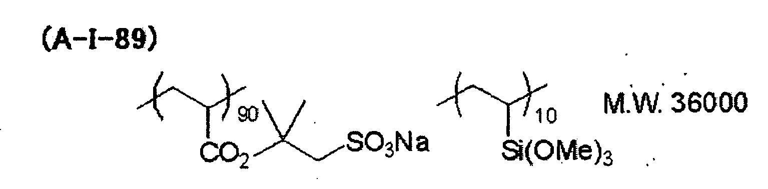

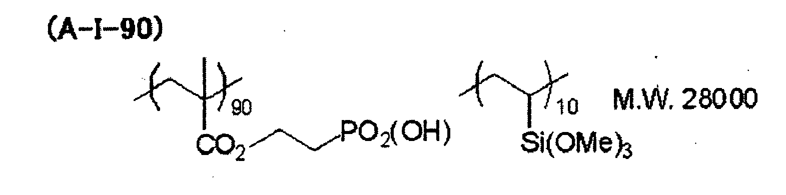

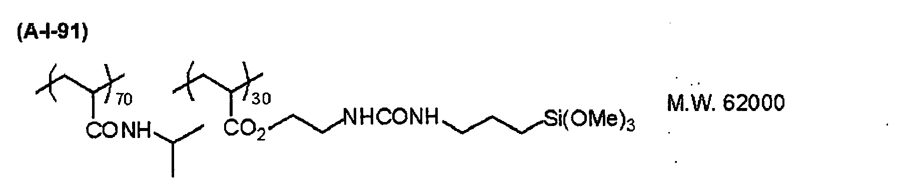

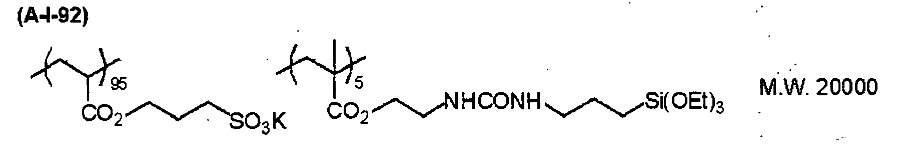

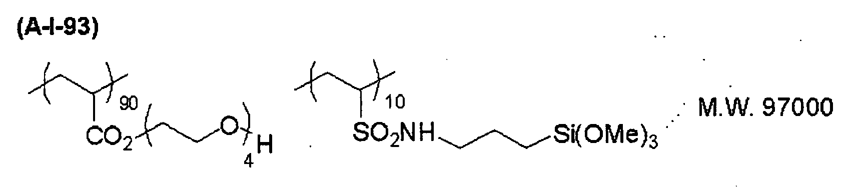

Starting materials for synthesizing the particular hydrophilic polymer (A) of the invention are commercially available, and also can readily be synthesized.
As the radical polymerization for synthesizing the particular hydrophilic polymer (A), any of known methods can be used. Specifically, general radical polymerization methods are described in, for example, Shin Kobunshi Jikken-gaku 3 (edited by Kyoritsu Shuppan in year 1999), Kobunshi No Gosei To Hanno 1 (compiled by The Society of Polymer Science and published by Kyoritsu Shuppan in year 1992); Shin Jikken Kagaku Koza 19 (edited by Maruzen in year 1978), Kobunshi Kagaku (I) (edited by The Chemical Society of Japan, Maruzen, 1996); and Busshitus Kogaku Koza, Kobunshi Gosei Kagaku (the publishing department of Tokyo Denki University in year 1995), and these methods can be employed.

Also, the above-mentioned particular hydrophilic polymers may be copolymers with other monomers to be described hereinafter. As the other monomers to be used, there are also illustrated known monomers such as acrylic acid esters, methacrylic acid esters, acrylamides, methacrylamides, vinyl esters, styrenes, acrylic acid, methacrylic acid, acrylonitrile, maleic anhydride, maleimide, etc. Various physical properties such as film-forming properties, film strength, hydrophilicity, hydrophobicity, solubility, reactivity, stability, etc. can be improved by copolymerizing these monomers.

As specific examples of the acrylic acid esters, there are illustrated methyl acrylate, ethyl acrylate, (n- or i-)propyl acrylate, (n-, i-, sec- or t-)butyl acrylate, amyl acrylate, 2-ethylhexyl acrylate, dodecyl acrylate, chloroethyl acrylate, 2-hydroxyethyl acrylate, 2-hydroxypropyl acrylate, 2-hydroxypentyl acrylate, cyclohexyl acrylate, allyl acrylate, trimethylolpropane monoacrylate, pentaerythritol monoacrylate, benzyl acrylate, methoxybenzyl acrylate, chlorobenzyl acrylate, hydroxybenzyl acrylate, hydroxyphenethyl acrylate, dihydroxyphenethyl acrylate, furfuryl acrylate, tetrahydrofurfuryl acrylate, phenyl acrylate, hydroxyphenyl acrylate, chlorophenyl acrylate, sulfamoylphenyl acrylate, 2-(hydroxyphenylcarbonyloxy)ethyl acrylate, etc.

As specific examples of the methacrylic acid esters, there are illustrated methyl methacrylate, ethyl methacrylate, (n- or i-)propyl methacrylate, (n-, i-, sec- or t-)butyl methacrylate, amyl methacrylate, 2-ethylhexyl methacrylate, dodecyl methacrylate, chloroethyl methacrylate, 2-hydroxyethyl methacrylate, 2-hydroxypropyl methacrylate, 2-hydroxypentyl methacrylate, cyclohexyl methacrylate, allyl methacrylate, trimethylolpropane monomethacrylate, pentaerythritol monomethacrylate, benzyl methacrylate, methoxybenzyl methacrylate, chlorobenzyl methacrylate, hydroxybenzyl methacrylate, hydroxyphenethyl methacrylate, dihydroxyphenethyl methacrylate, furfuryl methacrylate, tetrahydrofurfuryl methacrylate, phenyl methacrylate, hydroxyphenyl methacrylate, chlorophenyl methacrylate, sulfamoylphenyl methacrylate, 2-(hydroxyphenylcarbonyloxy)ethyl methacrylate, etc.

As specific examples of the acrylamides, there are illustrated acrylamide, N-methylacrylamide, N-ethylacrylamide, N-propylacrylamide, N-butylacrylamide, N-benzylacrylamide, N-hydroxyethylacrylamide, N-phenylacrylamide, N-tolylacrylamide, N-(hydroxyphenyl)acrylamide, N-(sulfamoylphenyl)acrylamide, N-(phenylsulfonyl)acrylamide, N-(tolylsulfonyl)acrylamide, N,N-dimethylacrylamide, N-methyl-N-phenylacrylamide, N-hydroxyethyl-N-methylacrylamide, etc.

As specific examples of the methacrylamides, there are illustrated methacrylamide, N-methylmethacrylamide, N-ethylmethacrylamide, N-propylmethacrylamide, N-butylmethacrylamide, N-benzylmethacrylamide, N-hydroxyethylmethacrylamide, N-phenylmethacrylamide, N-tolylmethacrylamide, N-(hydroxyphenyl)methacrylamide, N-(sulfamoylphenyl)methacrylamide, N-(phenylsulfonyl)methacrylamide, N-(tolylsulfonyl)methacrylamide, . N,N-dimethylmethacrylamide, N-methyl-N-phenylmethacrylamide, N-hydroxyethyl-N-methylmethacrylamide, etc.

As specific examples of the vinyl esters, there are illustrated vinyl acetate, vinyl butyrate, vinyl benzoate, etc.
As specific examples of the styrenes, there are illustrated styrene, methylstyrene, dimethylstyrene, trimethylstyrene, ethylstyrene, propylstyrene, cyclohexylstyrene, chloromethylstyrene, trifluoromethylstyrene, ethoxymethylstyrene, acetoxymethylstyrene, methoxystyrene, dimethoxystyrene, chlorosyrene, dichlorostyrene, bromostyrene, iodostyrene, fluorostyrene, carboxystyrene, etc.

The proportions of other monomers to be used for synthesizing the copolymers must be enough to improve various physical properties but, in order to provide sufficient functions as a hydrophilic film and obtain sufficient advantages of adding the particular hydrophilic polymer (A), the proportions are preferably not too large. Therefore, the total proportion of other monomers in the particular hydrophilic polymer (A) is preferably 80% by mass or less, more preferably 50% by mass or less.

In view of hardening properties and hydrophilicity, the content of the hydrophilic polymer (A) based on nonvolatile components of the hydrophilic composition is preferably from 5 to 95% by mass, more preferably from 15 to 90% by mass, most preferably from 20 to 85% by mass.

The hydrophilic polymer (A) may be used independently or in combination with other polymer. As the other polymer, hydrophilic polymers (C) to be described hereinafter are preferred.
In the case of using a mixture of the hydrophilic polymer (A) and the hydrophilic polymer (C), the mass ratio of the hydrophilic polymer (A) to the hydrophilic polymer (C) (hydrophilic polymer (A1)/hydrophilic polymer (A2)) contained in the hydrophilic composition is preferably from 5/95 to 50/50. The mass ratio is more preferably from 8/92 to 45/55, still more preferably 10/90 to 40/60, particularly preferably from 20/80 to 40/60.
Excellent adherent properties and antifouling properties with maintaining good hydrophilicity are obtained by adjusting the mass ratio of the hydrophilic polymer (A) to the hydrophilic polymer (C).

### [Hydrophilic polymer (C)]

The hydrophilic composition of the invention preferably contains a hydrophilic polymer (hereinafter referred to as "hydrophilic polymer (C)") having one hydrolyzable silyl group per molecule in addition to the hydrophilic polymer (A).
The hydrophilic polymer (C) is preferably a hydrophilic polymer having the structural unit represented by the following formula (c-b) and having, at the end of the polymer chain, a partial structure represented by the following formula (c-a).

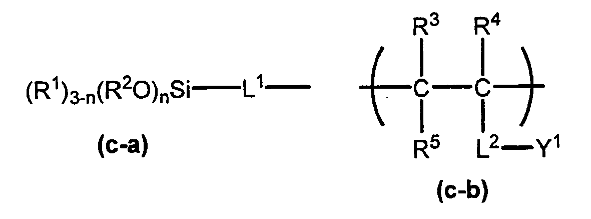

In the formulae (c-a) and (c-b), R¹ to R⁵ each independently represents a hydrogen atom or a hydrocarbon group (containing preferably from 1 to 8 carbon atoms). L¹ and L² each independently represents a single bond or a polyvalent organic linking group. n represents an integer of from 1 to 3. Y¹ represents a structural unit having one or more structures selected from the group consisting of -OH, -ORₐ, -CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}), -NHCON(Rₐ)(R_{b}), -SO₃Rₑ, -OSO₃Rₑ, -SO₂R_{d}, -NHSO₂R_{d}, -SO₂N(Rₐ)(R_{b}), -N(Rₐ)(R_{b})(R_{c}), -N(Rₐ)(R_{b})(R_{c})(R_{g}), -PO₃(Rₑ)(R_{f}), -OPO₃(Rₑ)(R_{f}) and -PO₃(R_{d})(Rₑ). Here, Rₐ, R_{b}, and R_{c} each independently represents a hydrogen atom or a straight, branched or cyclic alkyl group (containing preferably from 1 to 8 carbon atoms), R_{d} represents a straight, branched or cyclic alkyl group (containing preferably from 1 to 8 carbon atoms), Rₑ and R_{f} each independently represents a hydrogen atom, a straight, branched or cyclic alkyl group (containing preferably from 1 to 8 carbon atoms), an alkali metal, an alkaline earth metal or an onium, and Rg represents a straight, branched or cyclic alkyl group (containing preferably from 1 to 8 carbon atoms), a halogen atom, an inorganic anion or an organic anion.

As the hydrocarbon group when R¹ to R⁵ each represents a hydrocarbon group, there are illustrated those which are similar to the hydrocarbon groups having been illustrated with respect to the case when R¹ to R⁸ in the foregoing formulae (I-a) and (I-b) each represents a hydrocarbon group. Preferred hydrocarbon groups are also similar to those which have been described there. Also, the hydrocarbon groups may have a substituent. As such substituents, there are illustrated those which have been described hereinbefore.

L¹ and L² are the same as L¹ in the foregoing formulae (I-a) and (I-b). Preferred ones are also similar to those which have been described hereinbefore.
Y¹ is a hydrophilic group and is the same as X in the foregoing formulae (I-a) and (I-b), and preferred ones are also similar to those which have been described hereinbefore.

The hydrophilic polymer (C) can be synthesized according to known methods, for example, by conducting radical polymerization using a radical-polymerizable monomer and a silane coupling agent having chain transfer ability in radical polymerization. Since the silane coupling agent has the chain transfer ability, there can be synthesized a polymer into which a silane coupling group is introduced at the end of the polymer main chain by the radical polymerization.

The molecular weight of the hydrophilic polymer (C) is preferably from 1,000 to 1,000,000, more preferably from 1,000 to 500,000, most preferably from 1,000 to 200,000.

Specific examples of the particular hydrophilic polymer (C) will be described below together with the mass average molecular weight (M.W.) thereof, but the invention is not limited only to them.

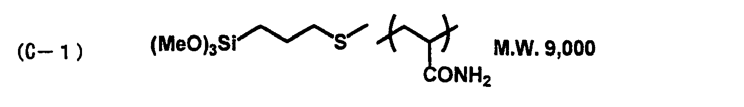

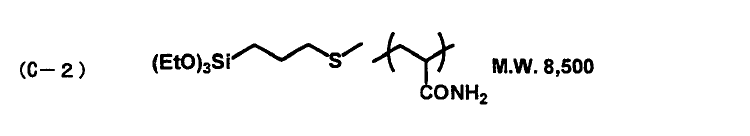

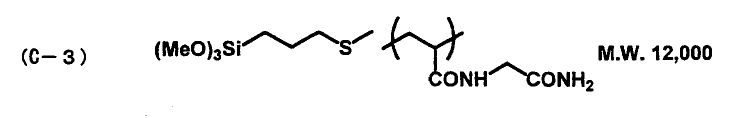

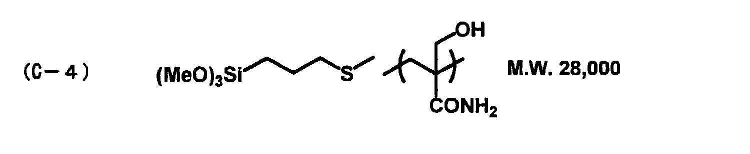

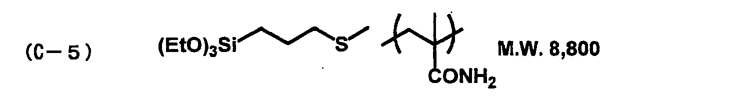

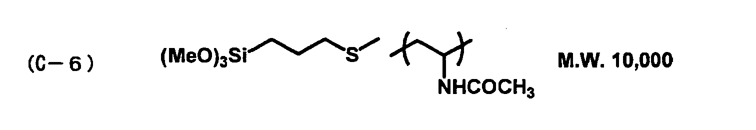

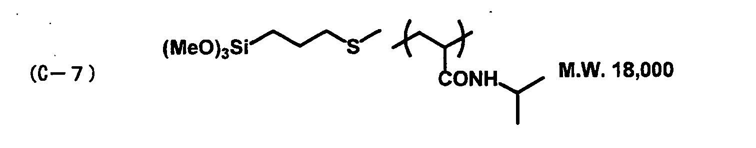

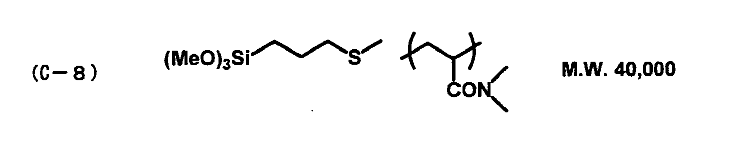

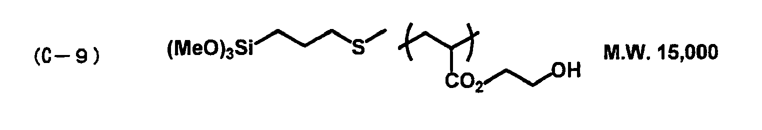

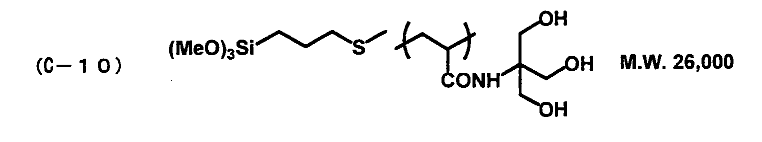

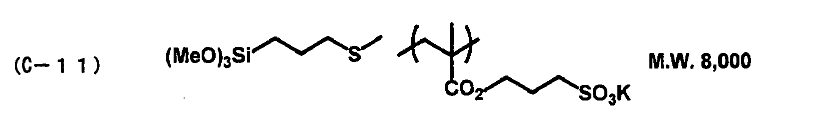

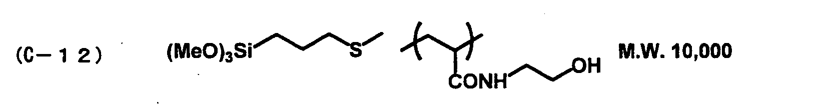

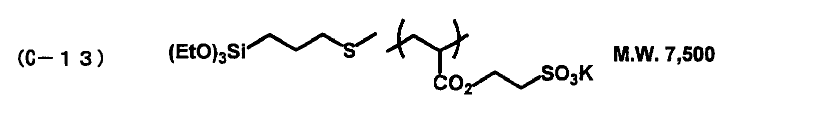

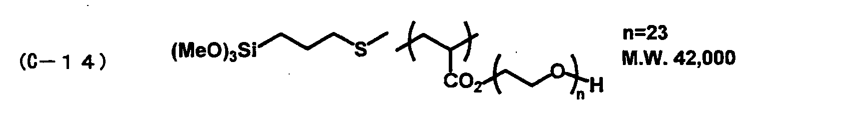

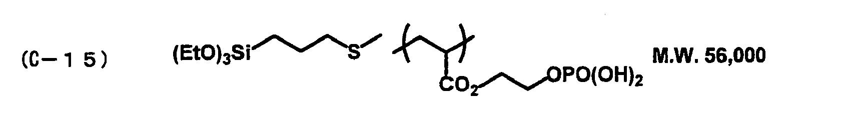

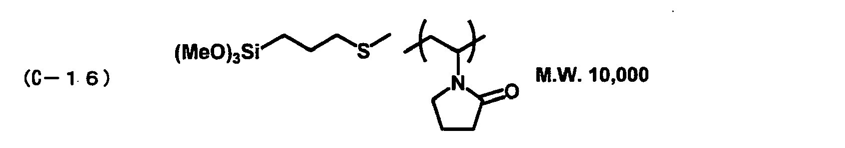

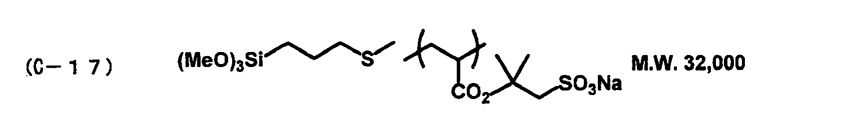

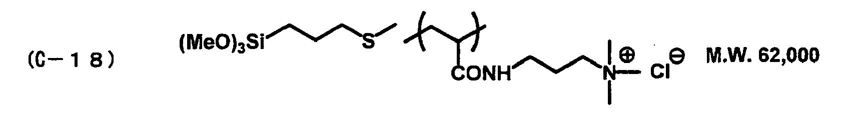

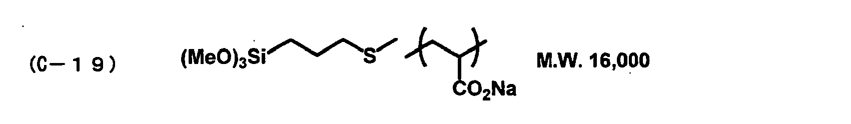

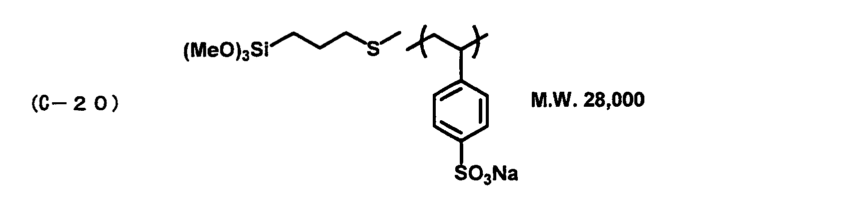

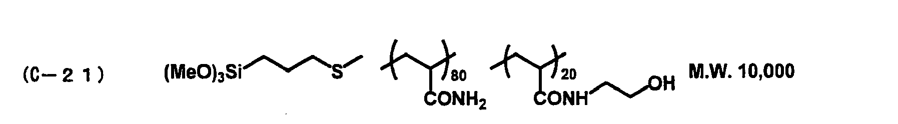

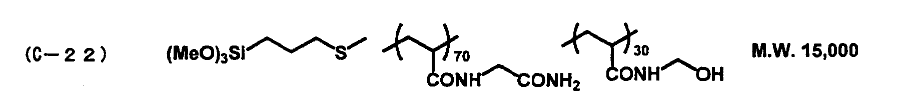

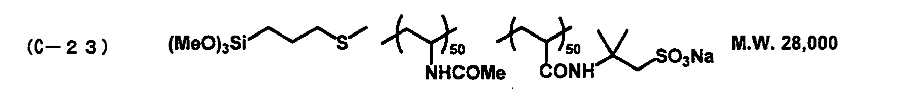

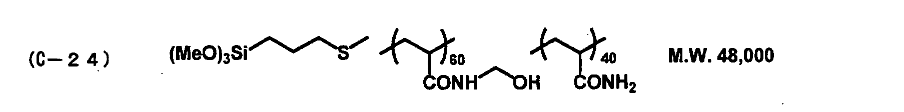

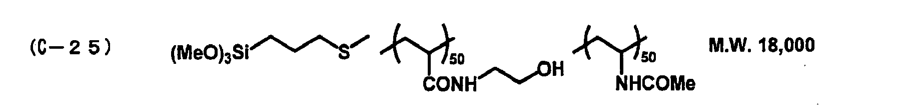

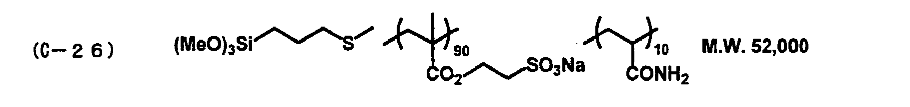

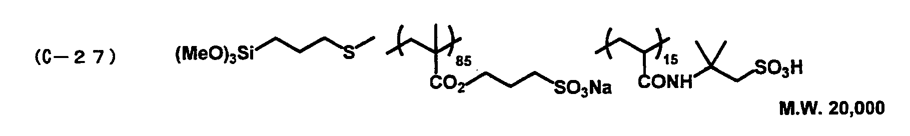

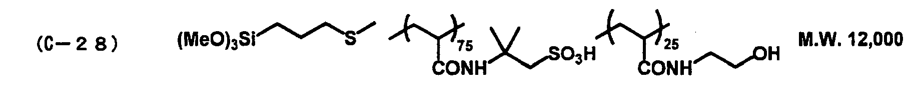

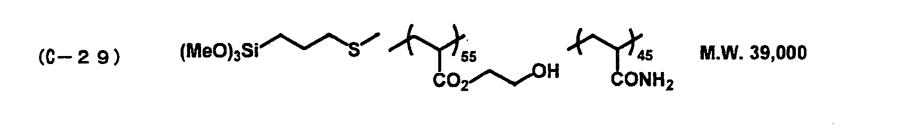

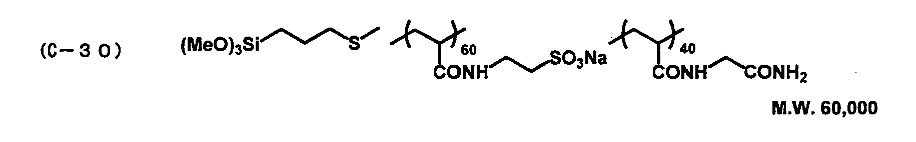

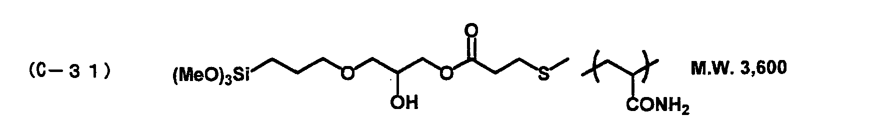

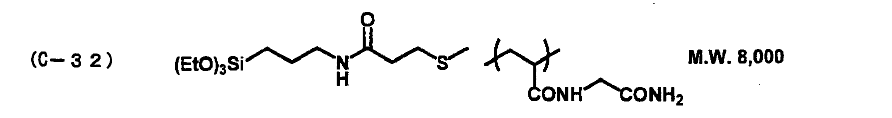

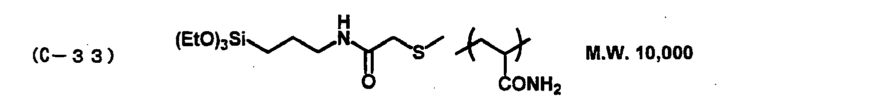

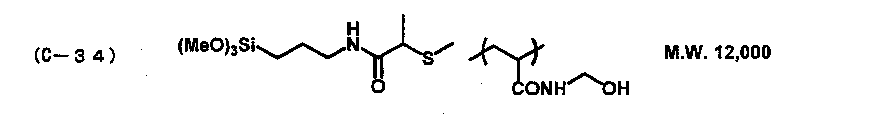

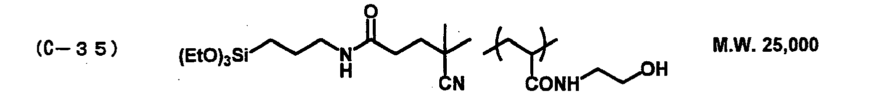

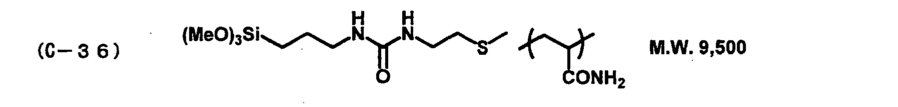

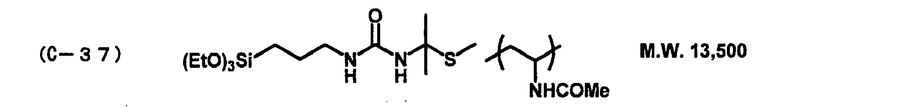

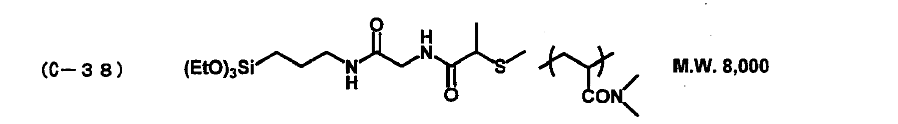

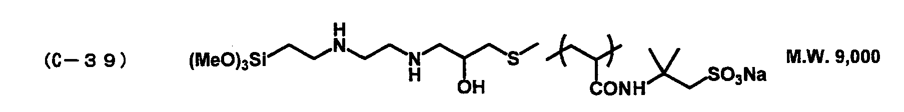

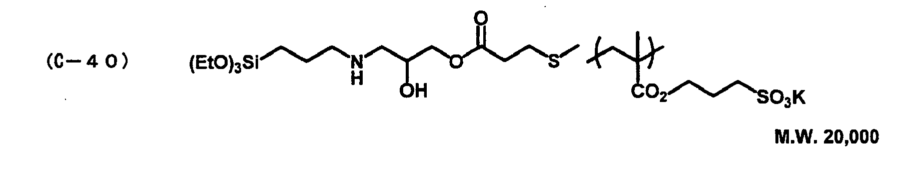

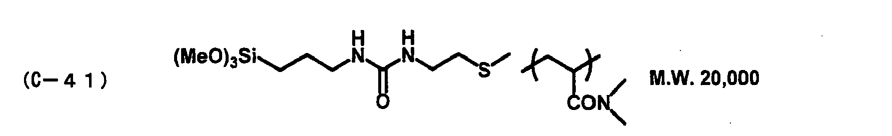

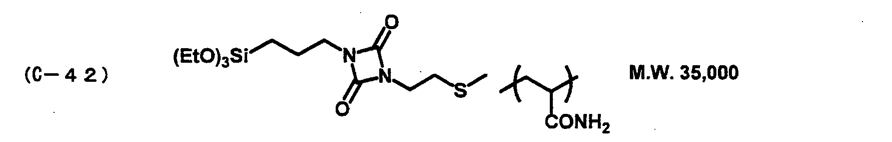

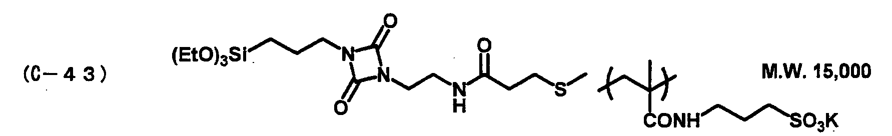

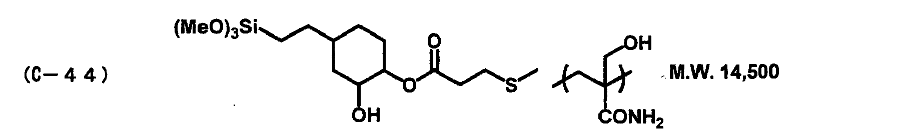

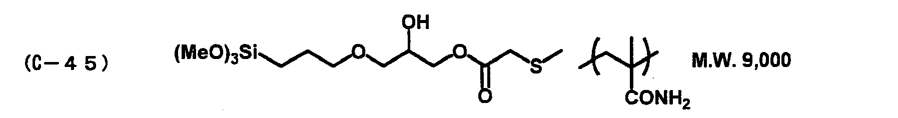

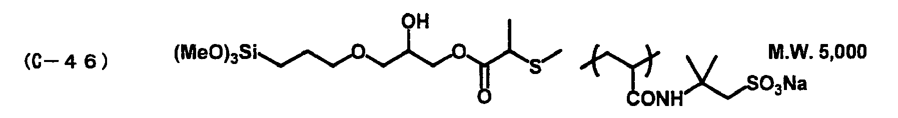

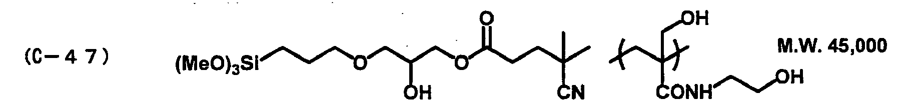

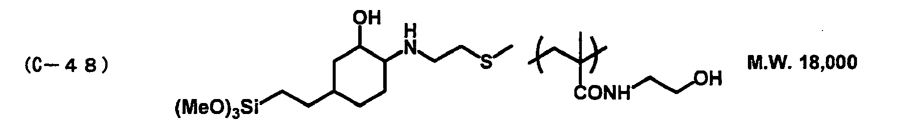

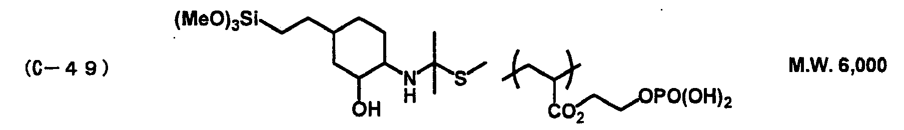

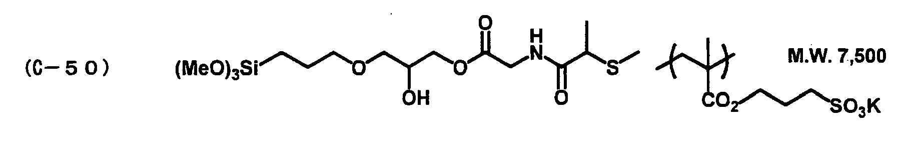

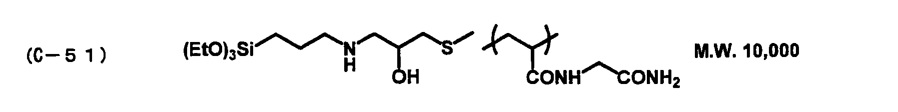

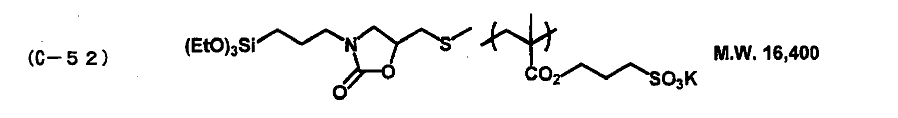

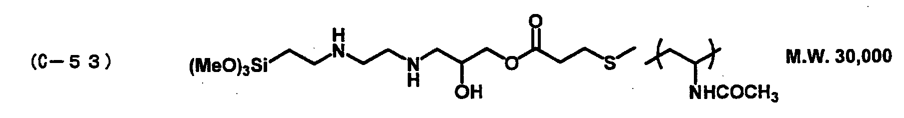

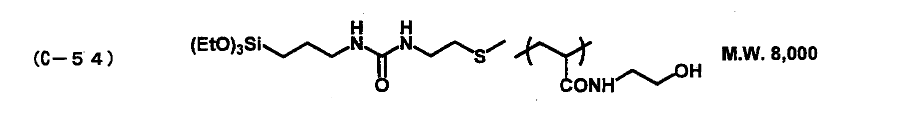

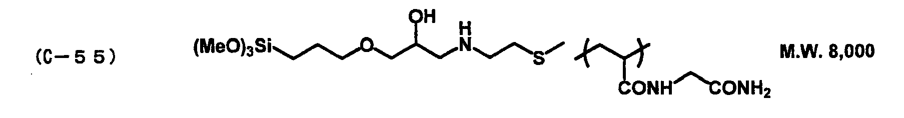

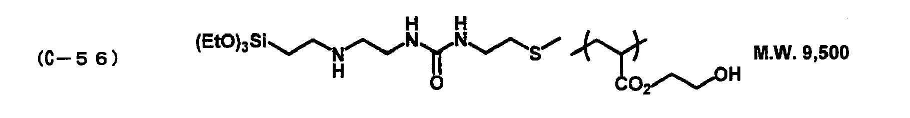

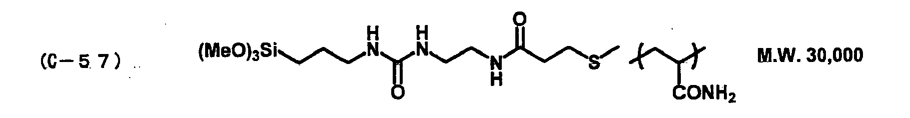

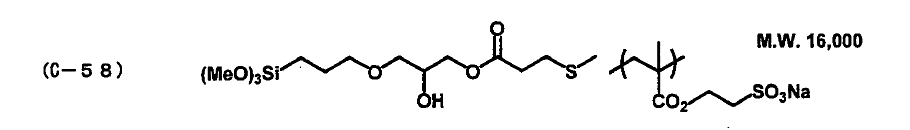

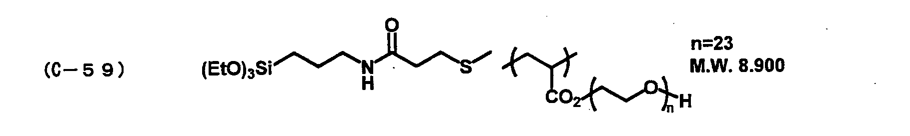

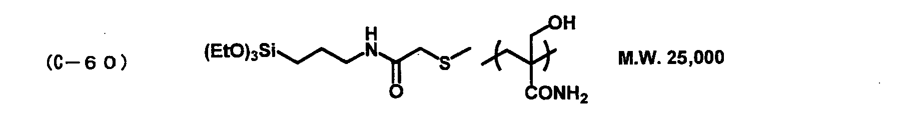

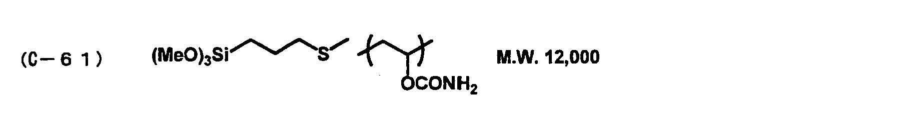

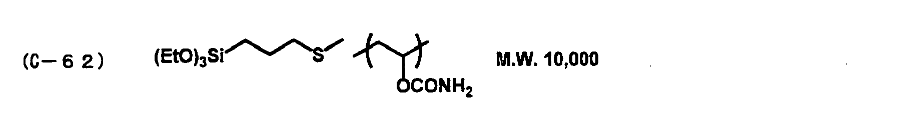

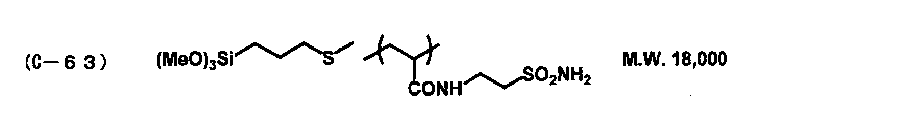

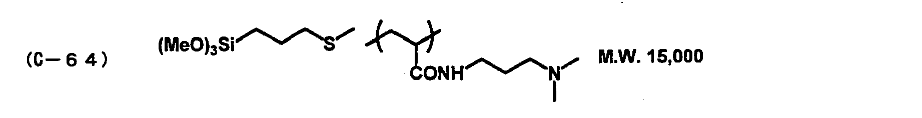

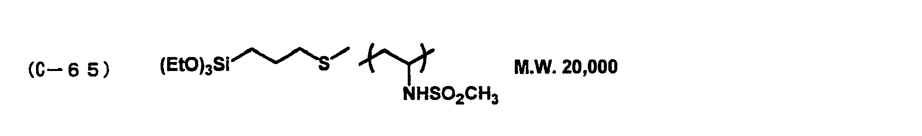

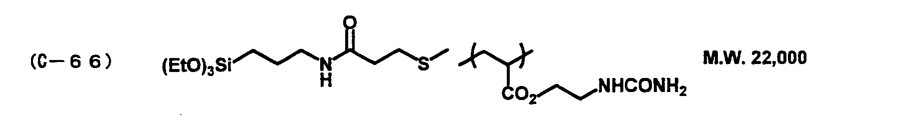

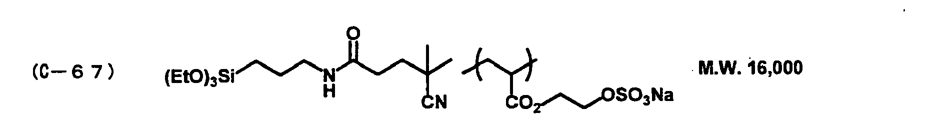

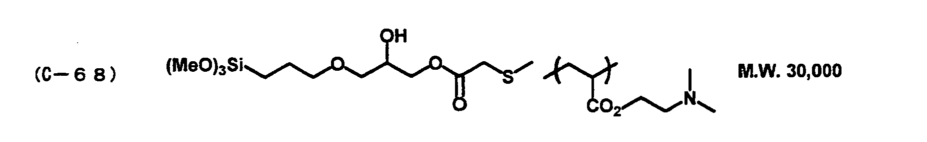

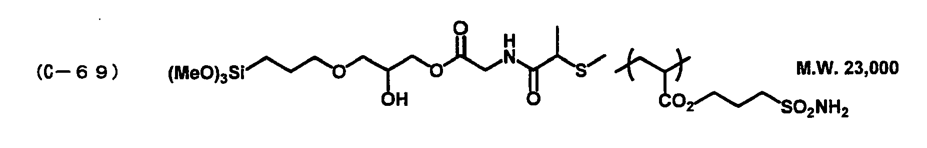

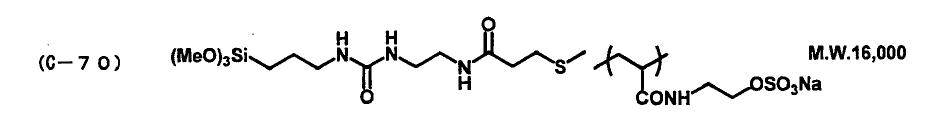

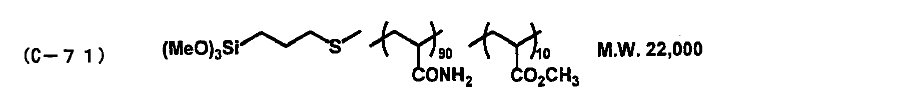

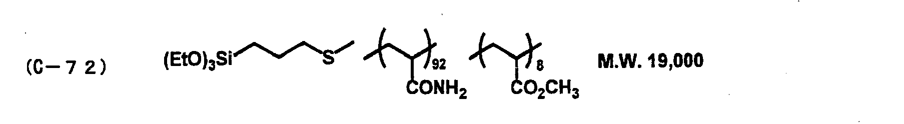

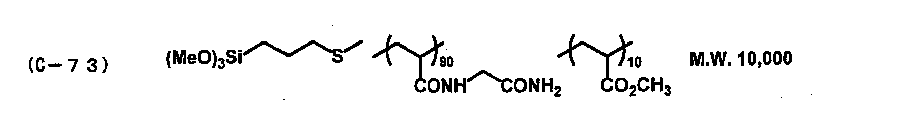

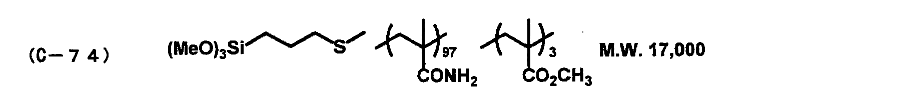

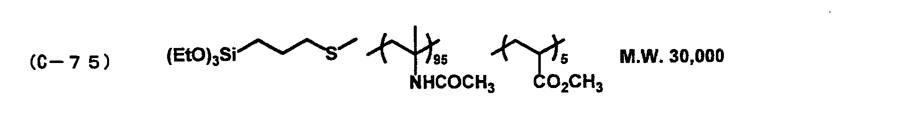

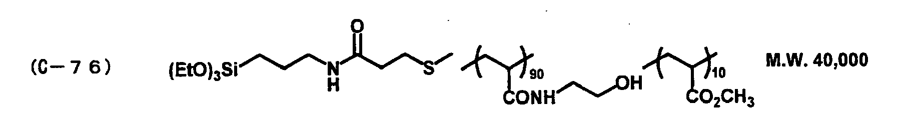

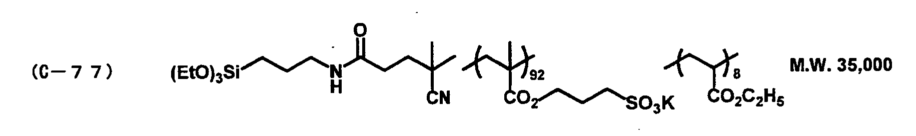

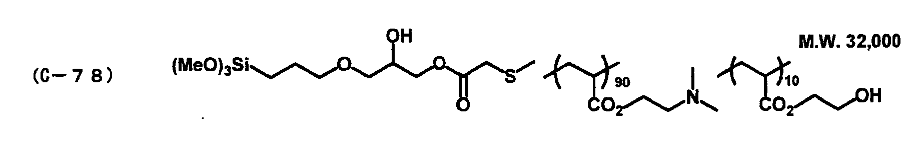

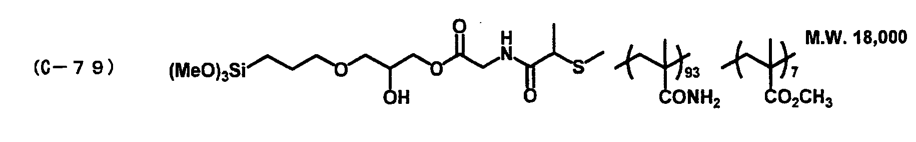

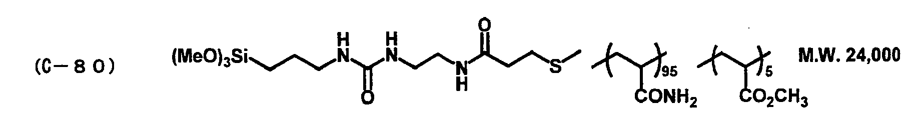

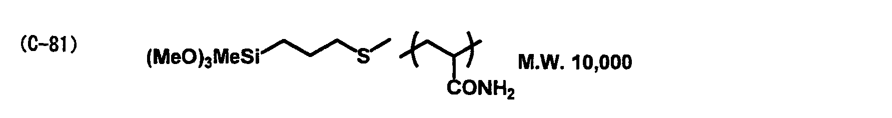

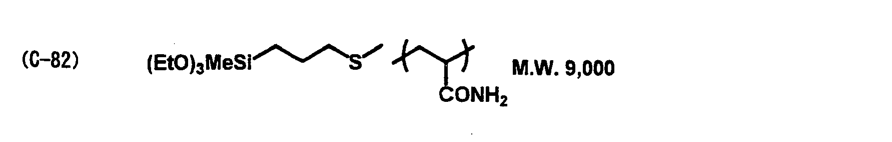

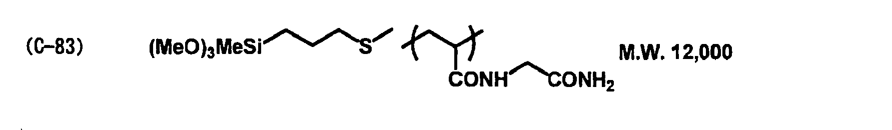

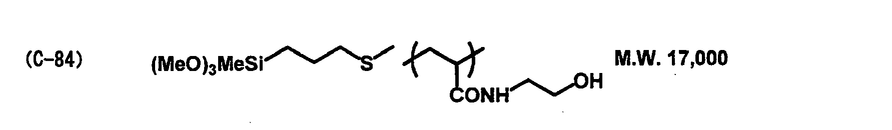

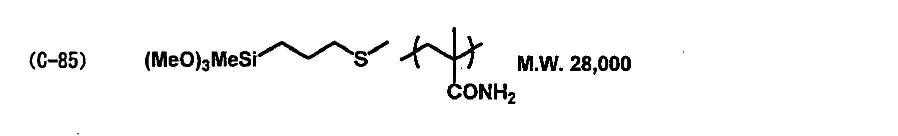

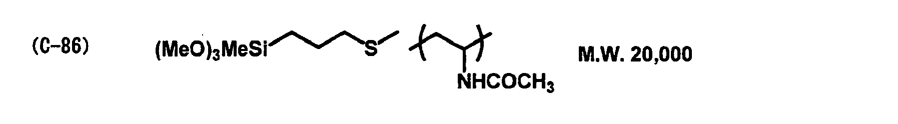

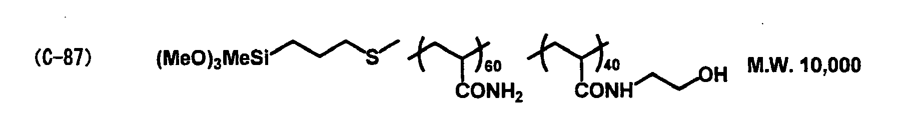

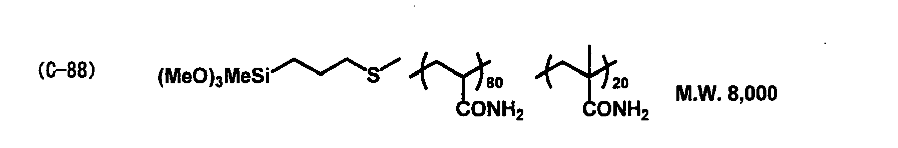

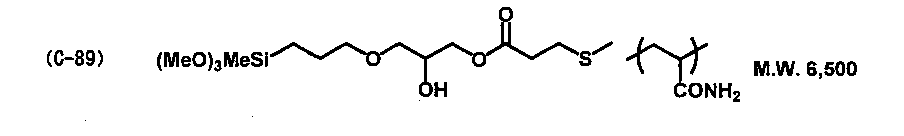

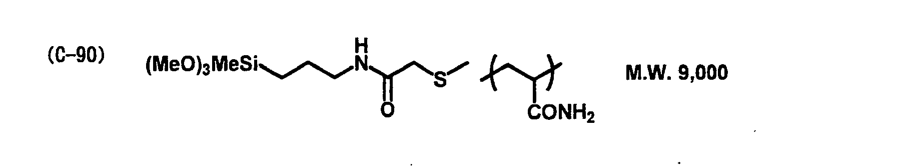

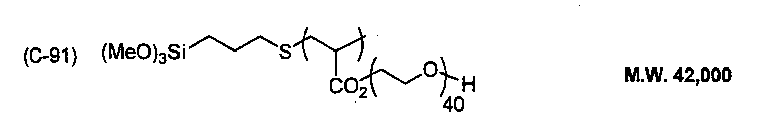

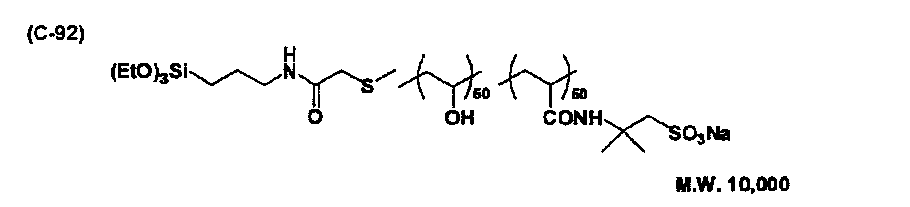

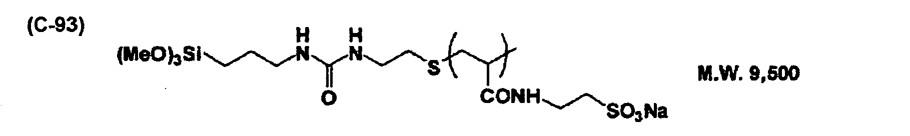

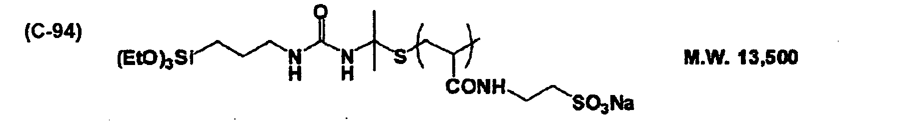

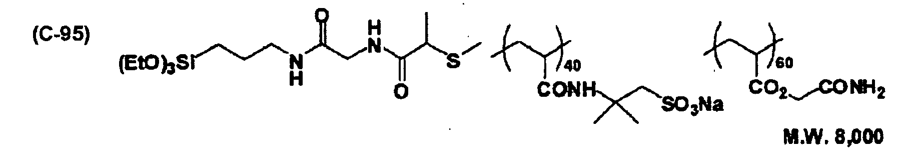

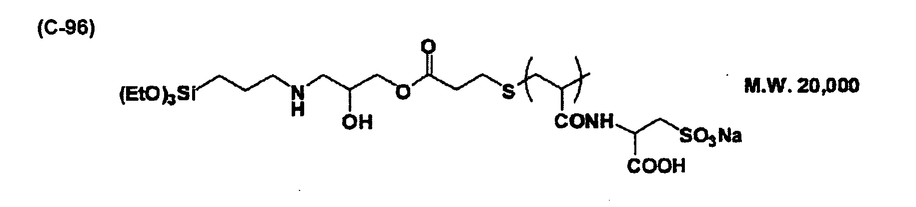

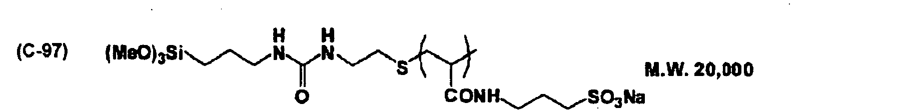

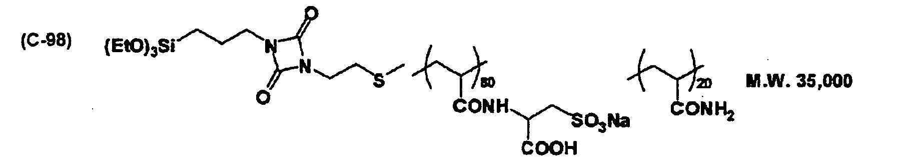

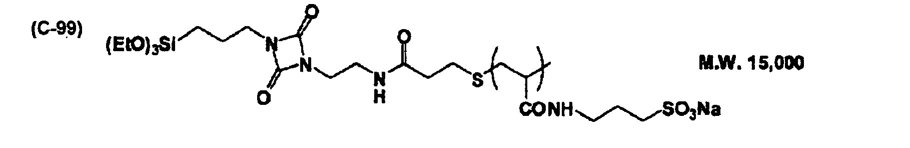

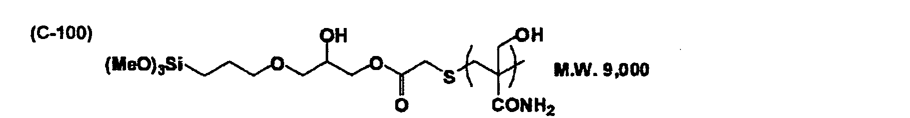

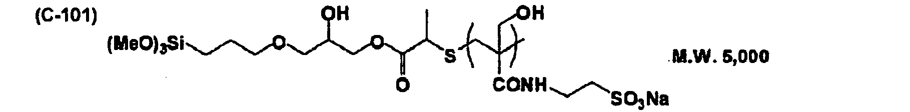

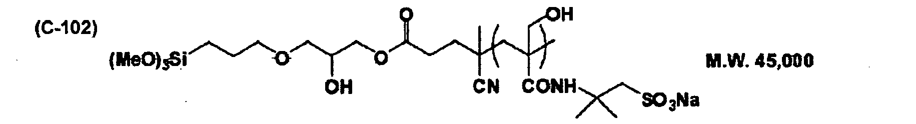

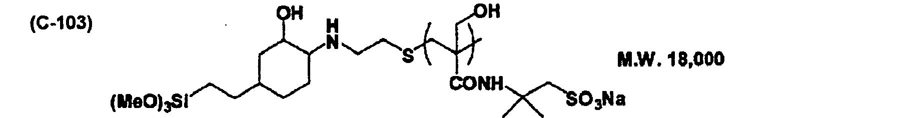

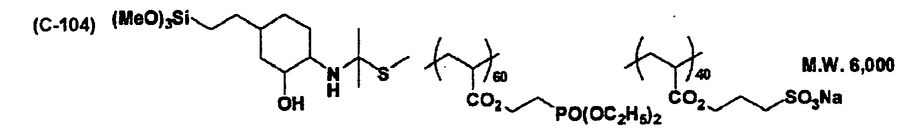

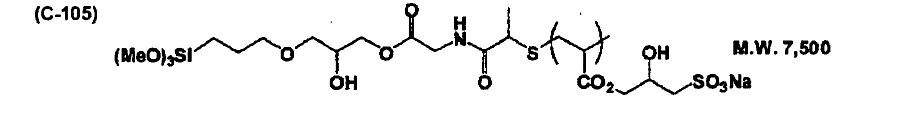

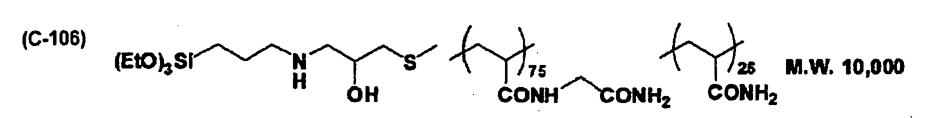

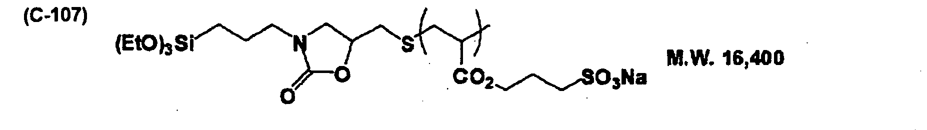

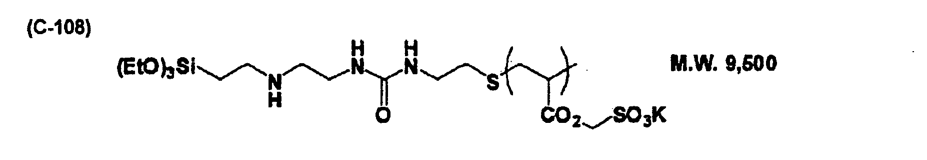

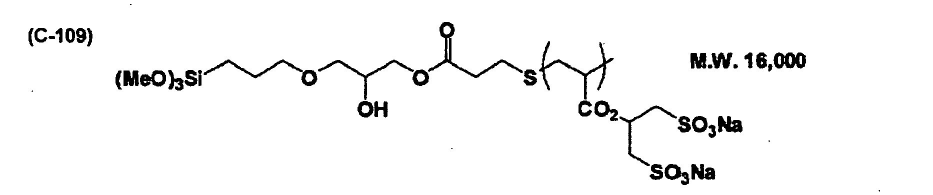

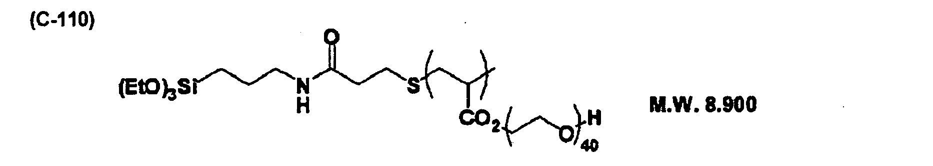

### [Catalyst (B)]

The hydrophilic composition of the invention contains as a catalyst at least one member selected from among an acid, an alkali, a metal chelate, and a metal salt. These will be described below.

### (Acid)

As the acid catalyst, there can be illustrated, for example, acetic acid, chloroacetic acid, citric acid, benzoic acid, dimethylmalonic acid, formic acid, propionic acid, glutaric acid, glycolic acid, maleic acid, malonic acid, hydrochloric acid, sulfuric acid, nitric acid, phosphoric acid, oxalic acid, p-toluenesulfonic acid, phthalic acid, etc., with hydrochloric acid and nitric acid being preferred.

### (Alkali)

As the alkali catalyst, there can be illustrated, for example, ammonia, sodium hydroxide, potassium hydroxide, sodium carbonate, etc., with ammonia and sodium hydroxide being preferred.

### (Metal chelate)

As the metal chelate, there are illustrated compounds constituted of a metal element selected among those belonging to the groups 2A, 3B, 4A, and 5A of the periodic table and an oxo or hydroxyl oxygen-containing compound selected from among β-diketones, keto esters, hydroxycarboxylic acids or esters thereof, amino alcohols, and enolic active hydrogen compounds.

Of the constitutional metal elements, elements of the group 2A such as Mg, Ca, Sr, and Ba, elements of the group 3B such as Al and Ga, elements of the group 4A such as Ti and Zr, and elements of the group 5A such as V, Nb, and Ta are preferred, and each of them forms a complex having an excellent catalytic effect. Above all, complexes obtained from Zr, Al, and Ti are excellent and preferred.

In the invention, as the oxo or hydroxyl oxygen-containing compound which constitutes a ligand of the foregoing metal chelate, there are illustrated β-diketones such as acetylacetone, acetylacetone (2,4-pentanedione) and 2,4-heptanedione, keto esters such as methyl acetoacetate, ethyl acetoacetate, and butyl acetoacetate, hydroxycarboxylic acids and esters thereof such as lactic acid, methyl lactate, salicylic acid, ethyl salicylate, phenyl salicylate, malic acid, tartaric acid, and methyl tartarate, keto alcohols such as 4-hydroxy-4-methyl-2-pentanone, 4-hydroxy-2-pentanone, 4-hydroxy-4-methyl-2-heptanone, and 4-hydroxy-2-heptanone, amino alcohols such as monoethanolamine, N,N-dimethylethanolamine, N-methyl-monoethanolamine, diethanolamine, and triethanolamine, enolic active compounds such as methylolmelamine, methylolurea, methylolacrylamide, and diethyl malonate, and compounds having a substituent on the methyl group, methylene group or carbonyl carbon of acetylacetone (2,4-pentanedione).

The ligand is preferably an acetylacetone or an acetylacetone derivative. In the invention, the acetylacetone derivative refers to a compound having a substituent on the methyl group, methylene group or carbonyl carbon of acetylacetone. Examples of the substituent which is substituted on the methyl group of acetylacetone include a straight or branched alkyl group, a straight or branched acyl group, a straight or branched hydroxyalkyl group, a straight or branched carboxyalkyl group, a linear or branched alkoxy group and a straight or branched alkoxyalkyl group each having from 1 to 3 carbon atoms; examples of the substituent which is substituted on the methylene group of acetylacetone include a carboxyl group and a straight or branched carboxyalkyl group and a straight or branched hydroxyalkyl group each having from 1 to 3 carbon atoms as well as a carboxyl group; and examples of the substituent which is substituted on the carbonyl carbon of acetylacetone include an alkyl group containing from 1 to 3 carbon atoms and, in this case, a hydrogen atom is added to the carbonyl oxygen to form a hydroxyl group.

As preferred specific examples of the acetylacetone derivative, there are illustrated ethylcarbonylacetone, n-propylcarbonylacetone, i-propylcarbonylacetone, diacetylacetone, 1-acetyl-1-propionyl-acetylacetone, hydroxyethylcarbonylacetone, hydroxypropylcarbonylacetone, acetoacetic acid, acetopropionic acid, diacetoacetic acid, 3,3-diacetopropionic acid, 4,4-diacetobutyric acid, carboxyethylcarbonylacetone, carboxypropylcarbonylacetone, and diacetone alcohol.

Of these, acetylacetone and diacetylacetone are particularly preferred. The complex of the foregoing acetylacetone derivative with the foregoing metal element is a mononuclear complex in which from 1 to 4 acetylacetone derivative molecules are coordinated per metal element. When the coordination number of the metal element is greater than the total coordination number of the acetylacetone derivative, ligands commonly used in usual complexes such as a water molecule, a halogen ion, a nitro group, and an ammonio group may be coordinated on the metal element.

As preferred examples of the metal complex, there are illustrated a tris(acetylacetonato)aluminum complex salt, a di-(acetylacetonato)aluminum aquocomplex, a mono-(acetylacetonato)aluminum chlorocomplex salt, a di-(diacetylacetonato)aluminum complex salt, ethylacetoacetate aluminum diisopropylate, aluminum tris(ethylacetoacetate), cyclic aluminum oxide isopropylate, a tris(acetylacetonato)barium complex salt, a di(acetylacetonato)titanium complex salt, a tris(acetylacetonato)titanium complex salt, a di-i-propoxy bis(acetylacetonato)titanium complex salt, zirconium tris(ethylacetoacetate), and a zirconium tris(benzoic acid) complex salt These metal complexes exhibit excellent stability in an aqueous coating solution and are excellent in an effect for accelerating the gelation in a sol-gel reaction at the heat drying. Above all, ethylacetoacetate aluminum diisopropylate, aluminum tris(ethylacetoacetate), a di(acetylacetonato)titanium complex salt, and zirconium tris(ethylacetoacetate) are particularly preferred.

### (Metal salt)

Metal salts may be used in place of the above-mentioned metal chelates. Examples of typical metal salts include halides, oxygen acid salts, and organic acid salts of a metal element selected from among the groups 2A, 3B, 4A, and 5A of the periodic table.

Among the aforesaid metal elements, elements of the group 2A such as Mg, Ca, Sr, and Ba, elements of the group 3B such as Al and Ga, elements of the group 4A such as Ti and Zr, and elements of the group 5A such as V, Nb, and Ta are preferred, and each of them forms a metal salt having excellent catalytic effects. Of them, metal salts obtained from Zr and Al are excellent and preferred.

As preferred metal salts, there are illustrated ZrOCl₂ · 8H₂O, ZrOSO₄ · nH₂O, ZrO(NO₃)₂ · 4H₂O, ZrO(CO₃)₂ · H₂O, ZrO(OH)₂ · nH₂O, ZrO(C₂H₃O₂)₂, (NH₄)₂ZrO(CO₃)₂, ZrO(C₁₈H₂₅O₂)₂, ZrO(C₈H₁₅O₂)₂, AlCl₃, Al₂O₃ · H₂O, Al₂O₃ · 3H₂O, Al₂(SO₄)₃ · 18H₂O, and Al₂(C₂O₄)₃ · 4H₂O.

The addition amount of the catalyst to be used in the hydrophilic composition is described below. Although the addition amount of this catalyst is not particularly limited, the addition amount is usually preferably in the range of from 0.1 to 20 parts by mass per 100 parts by mass of the hydrophilic polymer (A). In case when the addition amount of the catalyst is less than 0.1 part by mass, there result, in some cases, reduced hardening properties and insufficient hardening rate. On the other hand, in case when the addition amount exceeds 20 parts by mass, hydrophilicity of the resulting hardened product is reduced in some cases. Therefore, in view of obtaining better balance between hardening properties and hydrophilicity of the resulting hardened product, the addition amount of the catalyst is more preferably in the range of from 1 to 20 parts by mass per 100 parts by mass of the hydrophilic polymer.

In addition to the aforesaid necessary components of component (A) and component (B), various compounds may further be used in the hydrophilic composition of the invention as long as the advantages of the invention are not spoiled.
Hereinafter, components capable of being used in combination with the necessary components will be described below.

### Inorganic fine particles

The composition of the invention may contain inorganic fine particles for the purposes of enhancing hydrophilicity and improving film strength.
As the inorganic fine particles, there are suitably illustrated silica, alumina, magnesium oxide, titanium oxide, magnesium carbonate, calcium alginate, and mixtures of them.
The average diameter of inorganic fine particles ranges preferably from 2 nm to 1 µm, more preferably from 10 nm to 100 nm. When the average particle diameter is within the range specified above, the inorganic fine particles are dispersed with stability into the hydrophilic film formed by coating and drying the composition, and contribute to satisfactory retention of film strength of the hydrophilic film and to formation of a hydrophilic film with high durability and excellent hydrophilicity.
Of the inorganic fine particles as described above, colloidal silica dispersion is particularly preferred, and is readily available as a commercial product.
The content of the inorganic fine particles is preferably from 80% by mass or less, more preferably 50% by mass or less, with respect to the total solids in the composition.

### Surfactant

To the hydrophilic composition of the invention, a surfactant may be added.
Since air interface is hydrophobic, the hydrophilic groups of the hydrophilic polymer turn into the film, leading to reduction of hydrophilicity when the hydrophilic polymer is merely coated and dried. Thus, when a surfactant is added thereto, the hydrophilic side of the surfactant turns toward the surface of the coating film, whereby the surface of the coating film becomes hydrophilic. Therefore, the hydrophilic groups of the hydrophilic polymer can be oriented to the surface without turning into the film. As a result, high hydrophilicity can be realized.
As the surfactants, there are illustrated the surfactants disclosed in JP-A-62-173463 and JP-A-62-183457. For example, there are illustrated anionic surfactants such as dialkylsulfosuccinic acid salts, alkylnaphthalenesulfonic acid salts, and fatty acid salts; nonionic surfactants such as polyoxyethylene alkyl ethers, polyoxyethylene alkyl aryl ethers, acetylene glycols, and polyoxyethylene-polyoxypropylene block copolymers; and cationic surfactants such as alkylamines and quaternary ammonium salts. Instead of using these surfactants, organic fluorine compounds may be used. The organic fluorine compounds are preferably hydrophobic. Examples of such organic fluorine compounds include fluorine-containing surfactants, fluorine compounds in an oil state (e.g., fluorocarbon oil), and fluorocarbon resins in a solid state (e.g., tetrafluoroethylene resin), and there are illustrated those disclosed in JP-B-57-9053 (columns 8 trough 17) and JP-A-62-135826.
The addition amount of the surfactant is properly selected according to the intended purpose, and is preferably from 0.001 to 10% by mass, more preferably from 0.01 to 5% by mass, based on the total solids of the hydrophilic composition.

### Ultraviolet absorbent

From the viewpoint of improving weatherability and durability of a hydrophilic film formed from the hydrophilic composition, an ultraviolet absorbent can be used in the invention.
As the ultraviolet absorbent, there are illustrated the benzotriazole compounds described, e.g., in JP-A-58-185677, JP-A-61-190537, JP-A-2-782, JP-A-5-197075, and JP-A-9-34057, the benzophenone compounds described, e.g., in JP-A-46-2784, JP-A-5-194483, and U.S. Pat. No. 3,214,463, the cinnamic acid compounds described, e.g., in JP-B-48-30492, JP-B-56-21141, and JP-A-10-88106, the triazine compounds described, e.g., in JP-A-4-298503, JP-A-8-53427, JP-A-8-239368, JP-A-10-182621, JP-T-8-501291, the compounds described in Research Disclosure, No. 24239, and the compounds generating fluorescence by absorbing ultraviolet rays, typified by stilbene compounds and benzoxazole compounds, the so-called fluorescent whiteners.
The addition amount is properly selected according to the intended purpose and, generally, is preferably from 0.5 to 15% by mass on a solids basis.

### Antioxidant

An antioxidant can be added to the hydrophilic composition for the purpose of improving the stability of the hydrophilic film formed from the hydrophilic composition of the invention. As the antioxidant, there can be illustrated the compounds described in EP-A-223739, EP-A-309401, EP-A-309402, EP-A-310551, EP-A-310552, EP-A-459416, DE-A-3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and U.S. Pat. Nos. 4,814,262 and 4,980,275.
The addition amount of the antioxidant is properly selected according to the intended purpose, and is preferably from 0.1 to 8% by mass on a solids basis.

### Organic solvent

For the purpose of securing formability of a uniform coating on a substrate at the time of forming a hydrophilic film from the hydrophilic composition of the invention, it is also effective to add an organic solvent in a moderate amount to the coating solution for forming the hydrophilic layer.
As the solvent, there are illustrated, for example, ketone solvents such as acetone, methyl ethyl ketone, and diethyl ketone; alcohol solvents such as methanol, ethanol, 2-propanol, 1-propanol, 1-butanol, and tert-butanol; chlorine-containing solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; and glycol ether solvents such as ethylene glycol monomethyl ether and ethylene glycol dimethyl ether.
In this case, the addition of such a solvent is effective within the quantitative limitation within which no troubles related to VOC (volatile organic solvent) will occur, and the addition amount is preferably from 0 to 50% by mass, more preferably from 0 to 30% by mass, based on the total amount of the coating solution upon formation of the hydrophilic film.

### High-molecular compound

For the purpose of controlling film properties of the hydrophilic layer, various kinds of high-molecular compounds can be added to the hydrophilic composition of the invention within an amount of not spoiling hydrophilicity. As the high-molecular compound, there can be used acrylic polymers, polyvinyl butyral resins, polyurethane resins, polyamide resins, polyester resins, epoxy resins, phenol resins, polycarbonate resins, polyvinyl formal resins, shellac, vinyl resins, acrylic resins, gum resins, waxes, and other natural resins. Any two or more of these resins may be used in combination. Of these resins, vinyl copolymers obtained by copolymerization of acrylic monomers are preferred. Further, as a copolymer composition for polymeric binder, copolymers containing as structural units "carboxyl group-containing monomers", "alkyl methacrylates" or "alkyl acrylates" can also be preferably used.
The addition amount of the above-mentioned high-molecular compound is properly selected according to the intended purpose, and is preferably from 0.001 to 20% by mass, more preferably from 0.01 to 15% by mass, based on the total solids in the hydrophilic composition.

### Antibacterial agent

In order to impart antibacterial properties, anti-fungal properties, and anti-algae properties, an antibacterial agent can be incorporated in the hydrophilic composition. It is preferred in formation of the hydrophilic layer to incorporate a hydrophilic, water-soluble antibacterial agent. By incorporating the hydrophilic, water-soluble antibacterial agent, there can be obtained a surface-hydrophilic member having excellent antibacterial properties, anti-fungal properties, and anti-algae properties without spoiling surface hydrophilicity.
As the antibacterial agent, those compounds can be added which do not reduce hydrophilicity of the hydrophilic member and, as such antibacterial agents, there are illustrated inorganic antibacterial agents or water-soluble organic antibacterial agents. As the antibacterial agents, those which exhibit bactericidal effect against bacteria existing around person, such as bacteria typified by Staphylococcus aureus and Escherichia coli and fungi such as moulds and yeast can be used.
The addition amount of the above-mentioned antibacterial agent is properly selected according to the intended purpose, and is generally from 0.001 to 10% by mass, preferably from 0.005 to 5% by mass, more preferably from 0.01 to 3% by mass, particularly preferably from 0.02 to 1.5% by mass, most preferably from 0.05 to 1% by mass, based on the total solids in the hydrophilic composition. When the content is 0.001% by mass or more, there can be obtained effective antibacterial effect. Also, when the content is 10% by mass or less, hydrophilicity is not reduced, and film strength is not adversely affected.

Also, it is possible to further add as required, e.g., a leveling additive and a matting agent, waxes for adjusting film properties, and a tackifier for improvement in adhesiveness to a substrate in an amount not spoiling hydrophilicity.
Specific examples of the tackifier include the high-molecular-weight tacky polymers described in JP-A-2001-49200, pp. 5-6 (such as copolymers comprising (esters between (meth)acrylic acid and an alcohol containing from 1 to 20 carbon atoms, esters between (meth)acrylic acid and an alicyclic alcohol containing from 3 to 14 carbon atoms, and esters between (meth)acrylic acid and an aromatic alcohol containing from 6 to 14 carbon atoms), and low-molecular-weight tackiness imparting resin having polymerizable unsaturated bonds.

In addition, other than above, as long as the objects of the invention and hardening are not spoiled, additives such as a radical polymerization initiator, a photosensitizing agent, a polymerization inhibiting agent, a polymerization initiation aid, a wettability improving agent, a plasticizer, a charge preventing agent, a silane coupling agent, an antiseptic agent, a pigment, a drying agent, a precipitation preventing agent, a drip preventing agent, a thickening agent, an antiskinning agent, a color separation preventing agent, a lubricating agent, a defoaming agent, an antiadhesive agent, a delustering preventing agent, a flame retardant and an antirust agent can be contained.
The addition amount is properly selected according to the intended purpose, and is generally preferably from 0.5 to 15% by mass on a solids basis.

### [Preparation of hydrophilic composition]

Preparation of the hydrophilic composition can be conducted by dissolving the hydrophilic polymer and the catalyst and, as needed, a metal alkoxide or the like in a solvent such as ethanol, and stirring the resulting mixture. The reaction temperature is from room temperature to 50°C, and the reaction time, i.e., the period of continuing stirring, is in the range of preferably from 0.5 to 20 hours. By this stirring, hydrolysis and polycondensation of the two components is allowed to proceed to obtain an organic inorganic composite sol solution.

The solvent to be used in preparing the hydrophilic composition is not particularly limited so long as it can uniformly dissolve or disperse the components, but is preferably an aqueous solvent such as methanol, ethanol or water.

As has been described hereinbefore, preparation of the organic inorganic composite sol solution (hydrophilic composition) for forming a hydrophilic film from the hydrophilic composition of the invention utilizes the sol-gel process. The sol-gel process is described in detail in such books as "Sol-gel Ho Niyoru Hakumaku Coating gijutsu" published by K. K. Gijutsu Joho Kyokai in year 1988, Sol-gel Ho No Kagaku by Sumio Sakuhana and published by K. K. Agune Shofu-sha in year 1988 and Saisin Sol-gel Ho Niyoru Kinosei Hakumaku Sakusei Gijutsu by Seki Hirajima and published by Sogo Gijutsu Center in year 1992, and the processes described therein can be applied to preparation of the hydrophilic composition in the invention.
The hydrophilic member of the invention can be obtained by coating the hydrophilic composition on an appropriate substrate and drying it. That is, the hydrophilic member of the invention has a hydrophilic film formed by coating the hydrophilic composition on a substrate and heating and drying it.

### [Substrate]

As a substrate which can be used as a support of the hydrophilic composition of the invention and which is transparent in expectation of antifouling and/or antifogging effect, substrates capable of transmitting visible light, such as inorganic substrates including glass and glass containing an inorganic compound layer, a transparent plastic substrate, and a transparent plastic substrate containing an inorganic compound layer, can preferably be utilized.
To mention the inorganic substrates in detail, a usual glass plate, a laminated glass plate containing a resin layer, a gas layer, a vacuum layer, and the like, and various kinds of glass plates containing reinforcing ingredients, coloring agents, and the like can be illustrated.
As a glass plate containing an inorganic compound layer, there can be illustrated glass plates with inorganic compound layers formed from metallic oxides such as silicon oxide, aluminum oxide, magnesium oxide, titanium oxide, tin oxide, zirconium oxide, sodium oxide, antimony oxide, indium oxide, bismuth oxide, yttrium oxide, cerium oxide, zinc oxide, and ITO (Indium Tin Oxide), and metal halides such as magnesium fluoride, calcium fluoride, lanthanum fluoride, cerium fluoride, lithium fluoride, and thorium fluoride.
Such inorganic compound layers each can be configured to have a single-layer or multilayer structure. Depending on the thickness, each inorganic compound layer allows retention of transmittance to light in some instances, or allows action as an antireflection layer in other instances. To the formation of inorganic compound layers are applicable known methods including coating methods such as a dip coating method, a spin coating method, a flow coating method, a spray coating method, a roll coating method, and a gravure coating method; and vapor-phase methods, notably a physical vapor deposition (PVD) method and a chemical vapor deposition (CVD) method, such as a vacuum evaporation method, a reactive evaporation method, an ion-beam assist method, a sputtering method, and an ion plating method.

As a transparent plastic substrate among organic substrates like plastics, there can be illustrated substrates formed from various plastic materials capable of transmitting visible light. In particular, the substrate to be used as an optical material is selected in consideration of its optical characteristics including transparency, refractive index, and dispersivity. Depending on the end-use purpose, further considerations in selecting the substrate to be used are given to physical properties including strength-related physical characteristics such as impact resistance and flexibility, heat resistance, weatherability, and durability. In view of these points, there can preferably be illustrated polyolefin resins such as polyethylene and polypropylene, polyester resins such as polyethylene terephthalate and polyethylene naphthalate, polyamide resins, polystyrene, polyvinyl chloride, polyimide, polyvinyl alcohol, polyethylene-vinyl alcohol, acrylic resins, and cellulose resins such as triacetyl cellulose, diacetyl cellulose, and cellophane. Depending on the purpose of use, these materials may be used alone, or combinations of any two or more of them can also be used in the form of mixture, copolymer or laminate.
As the plastic substrates, it is also possible to use plastic plates on which are formed the inorganic compound layers described in the explanation of glass plates. In this case, each inorganic compound layer may also be made to act as an antireflection layer. In the case of forming inorganic compound layers on plastic substrates, the layers can be formed according to the same techniques as used in the case of inorganic substrates.
In the case of forming an inorganic compound layer on a transparent plastic substrate, a hard coating layer may be formed between the two layers. By providing the hard coating layer, the substrate surface is improved in hardness and becomes smooth. Hence, adhesiveness between the transparent plastic substrate and the inorganic compound layer is improved, and it becomes possible to increase scratch-proof strength and prevent appearance of cracks in the inorganic compound layer which results from bending of the substrate. By use of such a substrate, mechanical strength of the hydrophilic film can be improved. The hard coating layer has no particular restrictions as to its material so long as it has transparency, an appropriate hardness, and a mechanical strength. For example, resins curable by irradiation with ionizing radiation or ultraviolet rays and thermosetting resins can be used. In particular, ultraviolet ray-curable acrylic resins and organosilicon resins, and thermosetting polysiloxane resins are preferred. The refractive indexes of these resins are more preferably equivalent or approximate to those of transparent plastic substrates.
The method of applying such a hard coating layer is not particularly limited, and any method can be adopted as long as it allows application of a uniform coating. The hard coating layer can have sufficient strength when it has a thickness of 3 µm or above but, in view of transparency, coating accuracy, and handing, the thickness is preferably in the range of from 5 to 7 µm. Further, the hard coating layer can be given light diffusion treatment generally referred to as antiglare treatment by mixing and dispersing therein inorganic or organic particles having an average diameter of from 0.01 to 3 µm. These particles are not particularly limited except that transparency is required, but materials having a low refractive index are preferred. Silicon oxide and magnesium fluoride are particularly preferred in view of stability, heat resistance, etc. The light diffusion treatment can also be achieved by providing asperities on the surface of the hard coating layer.

As has been described above, the hydrophilic member can be obtained by using as its substrate a glass or plastic plate having an inorganic compound layer and forming on the substrate a hydrophilic surface. By having a hydrophilic film having excellent hydrophilicity and durability on its surface, the hydrophilic member can impart either excellent antifouling properties, particularly antifouling properties against oils-and-fats fouling, or excellent antifogging properties, or both to the surface of the support (substrate).

Antireflection layers applicable to the surface of the hydrophilic member of the invention are not limited to the inorganic compound layers described hereinbefore. For example, known antireflection layers of the type which each gets antireflective effect by laminating plural thin layers differing in reflectivity and refractive index can be used as appropriate. As materials for such thin layers, both inorganic and organic compounds can be used. Particularly, a substrate having on its surface an inorganic compound layer as an antireflection layer can be converted to the antifouling and/or antifogging member having excellent function of antifouling properties and/or antifogging properties and, further, excellent antireflection properties by application of the hydrophilic polymer chain in accordance with the invention to the substrate surface on the antireflection layer side. Further, it is also possible to obtain according to the intended purpose an antireflective, optically-functional member having various functions and properties using the hydrophilic member of the invention by bonding a functional optical member such as a polarizing plate to the member having the aforesaid constitution by a bonding technique typified by lamination.

By sticking any of those antireflection members or antireflective, optically-functional members on, e.g., glass plates, plastic plates or polarizing plates of the front screens of display devices of various types (e.g., a liquid crystal display, a CRT display, a projection display, a plasma display, an EL display) with the aid of an adhesive or a binding agent, application of such an antireflective member to a display device becomes possible.
Besides being applied to the display devices as described hereinbefore, the hydrophilic member of the invention can be applied to various uses in which antifouling and/or antifogging effects are required. Additionally, when it is intended to apply the antifouling and/or antifogging member to a substrate which is in no need of transparency, any of metal, ceramic, wood, stone, cement, concrete, fiber, fabric, and combinations or laminates of these materials can preferably be utilized as a support substrate in addition to the transparent substrates described above.

Also, in the case where the hydrophilic member of the invention is expected to have antifouling properties, any of metal, tile, ceramic, wood, stone, cement, concrete, fiber, fabric, paper and combinations or laminates of these materials can preferably be utilized as a support substrate beside the glasses and plastics. Particularly preferred substrates are glass substrates, plastic substrates, and aluminum substrates.

### (Method of treating substrate)

Upon coating the composition onto the substrate, the aforesaid hydrophilic film can be formed on the untreated substrate but, as needed, one side or both sides of the substrate may be subjected to the treatment of imparting hydrophilicity to the surface thereof for the purpose of improving adhesiveness to the hydrophilic film. As the above-mentioned treating method for imparting hydrophilicity to the surface, there are illustrated, for example, corona discharge treatment, glow discharge treatment, chromic acid treatment (wet process), flame treatment, heated air treatment, ozone-UV ray irradiation treatment, alkali washing, sand blast, and brush polishing.

### (Undercoating layer)

Furthermore, one or more undercoating layer can be provided. As a material for the undercoating layer, metal oxide film, hydrophilic resin, and water-dispersible latex can be used.
As the metal oxide film, there are illustrated SiO₂, Al₂O₃, ZrO₂, and TiO₂, and these films can be formed by a sol-gel method, a sputtering method or a vapor deposition method.
Examples of the hydrophilic resin include polyvinyl alcohol (PVA), cellulose resins [e.g., methyl cellulose (MC), hydroxyethyl cellulose (HEC), carboxymethyl cellulose (CMC), etc.], chitins, chitosans, starch, resins having ether bonds [e.g., polyethylene oxide (PEO), polyethylene glycol (PEG), polyvinyl ether (PVE), etc.], and resins having carbamoyl groups [e.g., polyacrylamide (PAAM), polyvinyl pyrrolidone (PVP), etc.]. Also, resins having carboxyl groups, such as polyacrylic acid salts, maleic acid resin, alginic acid salts, and gelatins, may also be illustrated.
Of the resins described above, resins of at least one kind selected from among polyvinyl alcohol resins, cellulose resins, resins having ether bonds, resins having carbamoyl groups, resins having carboxyl groups, and gelatins are preferred, and polyvinyl alcohol (PVA) resins and gelatins are particularly preferred.
As the water-dispersible latex, there are illustrated acrylic latex, polyester latex, NBR resin, polyurethane latex, polyvinyl acetate latex, SBR resin, and polyamide latex. Of these latexes, acrylic latex is preferred.
The hydrophilic resins described above may be used alone or as combinations of any two or more thereof. Further, the hydrophilic resin and the water-dispersible latex may be used in combination thereof.

Further, a cross-linking agent capable of forming cross-links in the hydrophilic resins described above or the water-dispersible latex may be used.
As cross-linking agents applicable to the invention, there are illustrated known cross-linking agents capable of thermally forming cross-links. As general cross--linking agents, there are illustrated those which are described in Shinzo Yamashita & Tousuke Kaneko, Kakyouzai Handbook, Taiseisha, Ltd. (1981). The cross-linking agents which may be used in the invention have no particular restrictions so long as each agent has two or more functional groups and can effectively bring about cross-linking reaction with the hydrophilic resins or the water-dispersible latexes. As specific examples of thermally cross-linking agents, there are illustrated polycarboxylic acids such as polyacrylic acid; amine compounds such as polyethylneimine; polyepoxy compounds such as ethylene or propylene glycol diglycidyl ether, tetraethylene glycol diglycidyl ether, nonaethylene glycol diglycidyl ether, polyethylene or polypropylene glycol glycidyl ether, neopentyl glycol diglycidyl ether, 1,6-hexanediol diglycidyl ether, trimethylolpropane triglycidyl ether, and sorbitol polyglycidyl ether; polyaldehyde compounds such as glyoxal and terephthalaldehyde; polyisocyanate compounds such as tolylene diisocyanate, hexamethylene diisocyanate, diphenylmethane isocyanate, xylylene diisocyanate, polymethylenepolyphenyl isocyanate, cyclohexyl diisocyanate, cyclohexanephenylene diisocyanate, naphthalene-1,5-diisocyanate, isopropylbenzene-2,4-diisocyanate, and polypropylene glycol/tolylene diisocyanate addition product; blocked polyisocyanate compounds; silane coupling agents such as tetraalkoxysilane; metallic cross-linking agents such as acetylacetonates of aluminum, copper and iron(III); and polymethylol compounds such as trimethylolmelanine and pentaerythritol. Of these thermally cross-linking agents, water-soluble ones are preferred from the viewpoints of easiness of preparation of coating solutions and prevention of reduction in hydrophilicity of the hydrophilic layer formed.

The total content of the hydrophilic resins and/or water-dispersible latexes in the undercoating layer is preferably from 0.01 to 20 g/m², more preferably from 0.1 to 10 g/m².

### [Coating method]

Coating methods are not particularly limited, and known methods such as a dip coating method, a spin coating method, a flow coating method, a spray coating method, a roll coating method, and a gravure coating method; and vapor-phase methods, notably a physical vapor deposition (PVD) method and a chemical vapor deposition (CVD) method, such as a vacuum evaporation method, a reactive evaporation method, an ion-beam assist method, a sputtering method, and an ion plating method may be employed.

### [Physical properties of hydrophilic layer]

### (Contact angle to water)

Hydrophilicity is generally measured in terms of contact angle to water. The surface of the hydrophilic member of the invention has a contact angle to a water drop in air measured at 20°C of preferably 15° or less, more preferably 10° or less.

In the case of applying (using or sticking) the hydrophilic member to a window pane or the like, transparency is of importance in view of ensuring visibility. The aforesaid hydrophilic film has excellent transparency and, even when the film thickness is large, does not suffer reduction in transparency, thus the film being capable of providing both transparency and durability.

The thickness of the hydrophilic film is preferably from 0.1 µm to 10 µm, more preferably from 0.1 µm to 5 µm. When the thickness is within the above-mentioned range, there results no defects such as uneven drying, and sufficient hydrohilicity can be exhibited, thus such thickness being preferred.

### [Use]

Uses to which the hydrophilic composition and the hydrophilic member are applicable will be illustrated below which, however, are not limitative at all.
Examples thereof include lenses such as lenses of spectacles, optical lenses, lenses for cameras, endoscope lenses, lenses for use in lighting, lenses for use in semiconductor equipment, and lenses for use in copiers; prisms; protective goggles, sporting goggles, protective mask shields, sports mask shields, helmet shields, construction materials, exteriors and coatings of vehicles such as cars, rail cars, aircraft, boats and ships, bicycles, and motorbikes, exteriors of mechanical devices and articles, dust-resistant covers and coatings, traffic signs, various display devices, advertising towers, road sound abatement shields, railroad soundproof walls, bridges, exteriors and coatings of guardrails, interiors and coatings of tunnels, insulators, solar cell covers, heat collecting covers of solar water heaters, vinyl houses, panel light covers of cars, home accommodations, toilets, bathtubs, washstands, lighting fixtures, illumination covers, kitchen utensils, dishes, dish washers, dish driers, sinks, kitchen ranges, kitchen hoods, ventilating fans, signboards, traffic signs, soundproof walls, vinyl houses, covers for vehicles, tent materials, antireflection plates, shutters, screen doors, solar cell covers, covers for heat collectors of solar water heaters, streetlights, paved roads, outdoor illumination, stones for artificial fall and artificial fountain, tiles, bridges, greenhouses, outside wall members, sealers between walls or glasses, guardrails, verandas, vending machines, outdoor machines for air conditioners, outdoor benches, various display devices, shutters, tollgates, fee boxes, gutters for roofs, covers for protecting vehicle lamps, dust-resistant covers and coatings, coatings of mechanical apparatuses and articles, exteriors and coatings of advertising towers, structural members, home accommodations, toilets, bathtubs, washstands, lighting fixtures, kitchen utensils, dishes, dish driers, sinks, kitchen ranges, kitchen hoods, ventilating fans, window rails, window frames, inside walls of tunnels, illumination inside tunnels, window sashes, fin materials of heat exchangers, road mirrors, mirrors for use in bathrooms, washstand mirrors, ceilings for vinyl houses, washing and dressing tables, automobile bodies, roof members for snowy countries, antennas, power cables, members for medical diagnostic machines, catheters for medical use, displays for personal computers or TV sets, containers for cosmetics, filters, aluminum wheels for automobiles, finders for cameras, members for printing apparatuses, and film or wappen to be stuck to the surfaces of the articles described above.

Of the uses described above, application of the hydrophilic member in accordance with the invention to fin members is preferred, particularly preferably to a fm member made from aluminum. That is, it is preferred to coat a fin member body (preferably an aluminum fin member) with the hydrophilic composition in accordance with the invention to form a hydrophilic layer on the fin member surface.
Aluminum fin members used in heat exchangers for room air conditioners or car air conditioners cause degradation in cooling capabilities during the cooling operation, because aggregated water produced during the cooling grows into water drops and stays between fins to result in formation of water bridges. In addition, dust gets deposited between fins, and thereby degradation in cooling capabilities is also caused. With these problems in view, fin members having excellent hydrophilic and antifouling properties and long persistence of these properties are obtained by applying the hydrophilic members of the invention to fin members.
It is preferred that the fin members in accordance with to the invention have water contact angles of 40° or below after they are subjected to 5 cycles of treatment including exposure to palmitic acid gas for 1 hour, washing with water for 30 minutes, and drying for 30 minutes.

As aluminum which can be used for the fin member, there is illustrated an aluminum plate whose surface has undergone degreasing treatment and, when required, chemical conversion treatment. It is preferred for the surface of the aluminum fin member to undergo chemical conversion treatment in view of adhesiveness to a coating formed by hydrophilicity imparting treatment, corrosion resistance, and so on. An example of the chemical conversion treatment is chromate treatment. Typical examples of chromate treatment include alkali salt-chromate methods (such as B.V. method, M.B.V. method, E.W. method, Alrock method, and Pylumin method), a chromic acid method, a chromate method, and a phosphoric acid-chromic acid method, and non-washing coat-type treatment with a composition predominantly composed of chromium chromate.

As a thin aluminum plate usable for the fin member of a heat exchanger, any of pure aluminum plates compliant with JIS, such as 1100, 1050, 1200, and 1N30, Al-Cu alloy plates compliant with JIS, such as 2017 and 2014, Al-Mn alloy plates compliant with JIS, such as 3003 and 3004, Al-Mg alloy plates compliant with JIS, such as 5052 and 5083, and Al-Mg-Si alloy plates compliant with JIS, such as 6061 may be used, and these thin plates may have either sheeted or coiled shape.

Fin materials in accordance with the invention are preferably used in heat exchangers. The heat exchangers using fin members in accordance with the invention can prevent water drops and dust from depositing between fins because the fin members have excellent hydrophilic and antifouling properties and long persistence of these properties. As the heat exchangers, there are illustrated heat exchangers for use in a room cooler or room-air conditioner, an oil cooler for construction equipment, a car radiator, a capacitor, and so on.
Also, it is preferred that the heat exchangers with fin members in accordance with the invention be used in air conditioners. The fin members in accordance with the invention have excellent hydrophilic and antifouling properties and long persistence of these properties, and hence they can provide air conditioners less suffering the problem of degradation in cooling capabilities as described hereinbefore. These air conditioners may be any of room-air conditioners, packaged air conditioners, and car air-conditioners.
In addition, known techniques (as disclosed in JP-A-2002-106882 and JP-A-2002-156135) can be applied to the heat exchangers and air conditioners in accordance with the invention, and the invention has no particular restrictions as to techniques adopted.

### EXAMPLES

The invention will be described in detail by reference to Examples, but the scope of the invention is not limited by them.

### [Examples 1 to 26]

Float plate glass (2mm thick) which is the most common transparent plate glass is prepared, and the surface of the plate glass is hydrophilized by UV/O₃ treatment for 10 minutes to prepare a substrate to be coated. Each coating solution having the formulation shown in Table 1 is stirred for 2 hours at 25°C, coated on the substrate by using a coating bar, and then dried at 150°C for 30 minutes to thereby form a hydrophilic film of 3.0 g/m² in dry coated amount.
Methods for preparing the components or companies which provide the components are shown in Table 1.

### [Synthesis of hydrophilic polymer (1)]

11.9 g of acrylamide, 11.6 g of acrylamide-3-(ethoxysilyl)propyl and 280 g of 1-methoxy-2-propanol were placed in a 500-ml three-neck flask and, in a stream of 80°C nitrogen, 1.8 g of dimethyl 2,2'-azobis(2-methylpropionate) was added thereto. The mixture was kept at the same temperature while stirring for 6 hours and thereafter cooled to room temperature. Then, the reaction solution was poured into 2 liter of acetone, and the precipitated solid was collected by filtration. The obtained solid was washed with acetone to obtain hydrophilic polymer (1). The weight after drying was 22.6 g. By GPC (polyethylene oxide standard), this polymer was found to be a polymer having a mass average molecular weight of 22800.
Hydrophilic Polymers used in the following Examples were synthesized in the same manner and used for evaluation. The structure of the hydrophilic polymers (1) to (6) used in Examples is shown below.

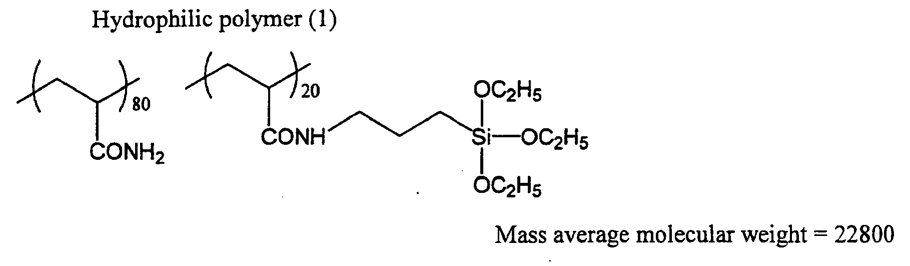

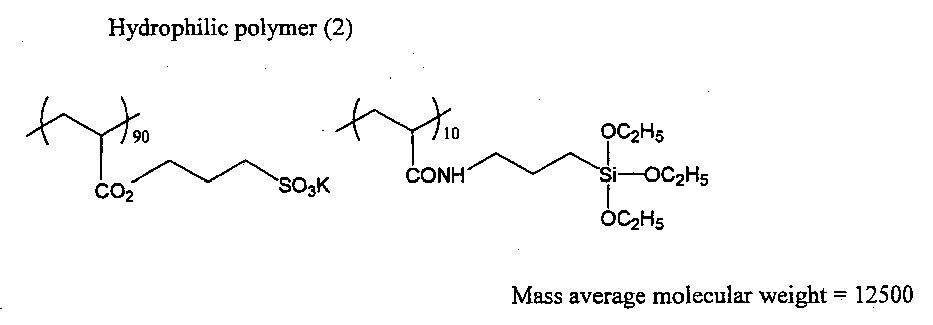

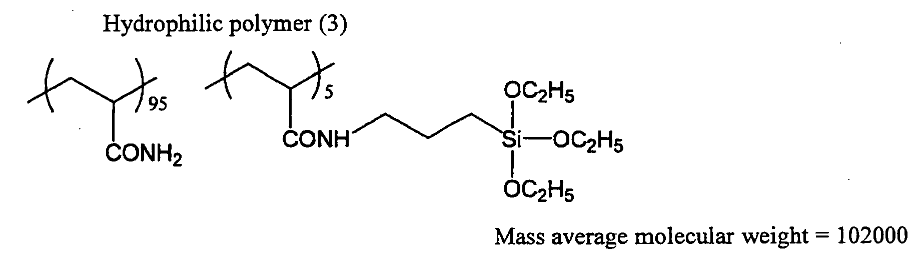

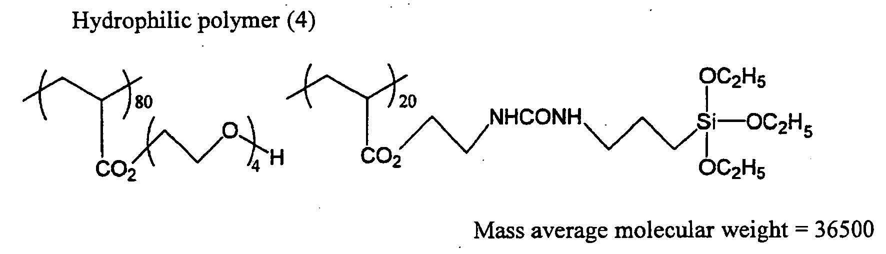

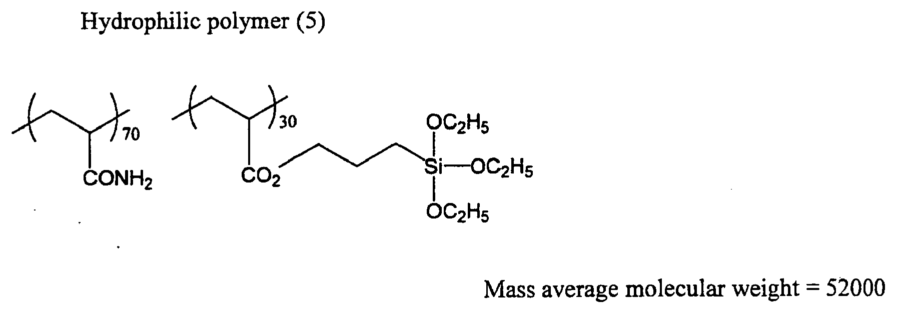

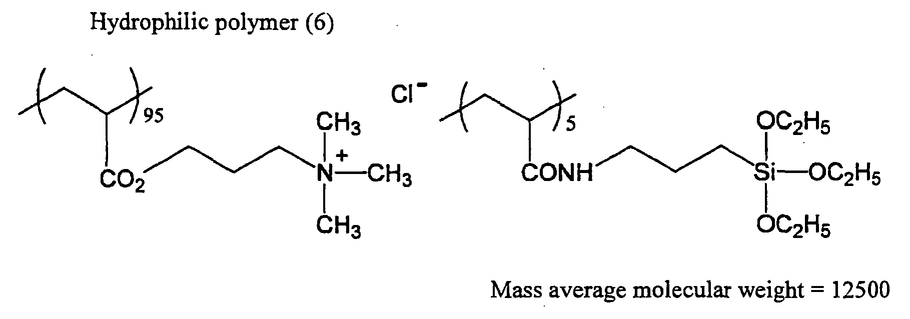

### [Synthesis of hydrophilic polymer (C1)]

28 g of acrylamide, 3.5 g of 3-mercpatopropyltrimethoxysilane, and 51.3 g of dimethylformamide were placed in a three-neck flask, and heated to 65°C in a nitrogen stream, and 0.36 g of 2,2'-azobis(2,4-dimethylvaleronitrile) was added thereto to initiate the reaction. After stirring for 6 hours, the reaction solution was returned to room temperature and poured in 1.5 L of ethyl acetate and, as a result, a solid was precipitated. The solid was collected by filtration, thoroughly washed with ethyl acetate and dried. Thus, hydrophilic polymer (C1) was obtained. By GPC (polystyrene standard), this hydrophilic polymer (C1) was found to have a mass average molecular weight of 46200
The structure of the hydrophilic polymer (C1) is as follows.

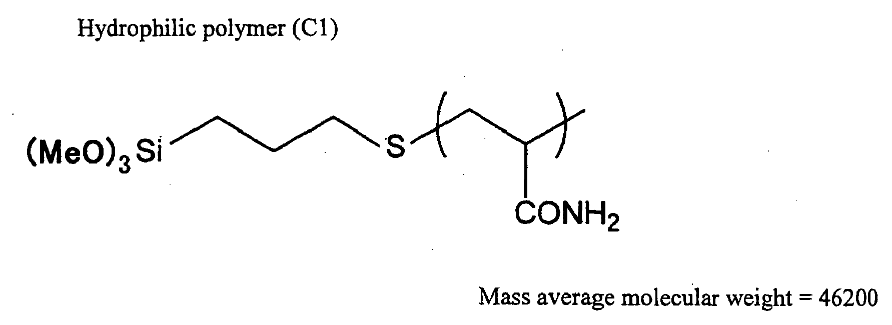

### <Catalyst solution (1)>

200 g of ethanol and 10 g of acetylacetone were mixed, and 10 g of tetraethyl orthotitanate was added thereto and, after stirring for 10 minutes, 100 g of purified water was added, followed by stirring for 1 hour to prepare a catalyst solution (1).

### <Catalyst solution (2)>

An aqueous solution of Zircozol ZA-30 (ZrO(C₂H₃O₂)₂ (manufactured by Daiichi Kigenso Kagaku Kogyo Co., Ltd.) was used.

### <Catalyst solution (3)>

A 1 N hydrochloric acid solution (manufactured by Wako Pure Chemical Industries, Ltd.) was used.

### <Surfactant>

A 5% by mass of aqueous solution of an anionic surfactant of the following structural formula was used.

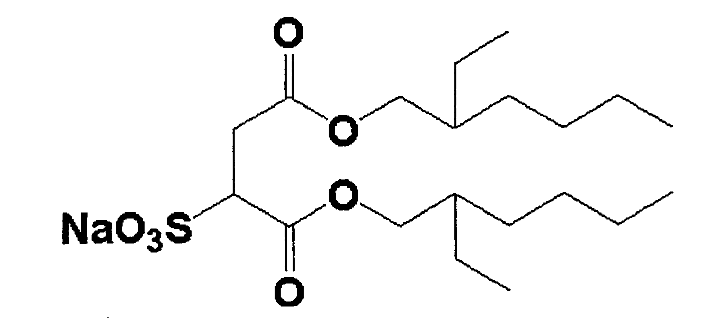

**[Table 1]**

| | Hydrophilic Polymer | Catalyst Solution | Surfactant | Purified Water | Film Thickness |
|---|---|---|---|---|---|
| Example 1 | Hydrophilic polymer (1) 50 g | Catalyst solution (1) 4 g | 0.5 g | 450 g | 3 µm |
| Example 2 | Hydrophilic polymer (1) 50 g | Catalyst solution (1) 8 g | 0.5 g | 450 g | 3 µm |
| Example 3 | Hydrophilic polymer (1) 50 g | Catalyst solution (1) 0.03 g | 0.5 g | 450 g | 3 µm |
| Example 4 | Hydrophilic polymer (1) 50 g | Catalyst solution (1) 15 g | 0.5 g | 450 g | 3 µm |
| Example 5 | Hydrophilic polymer (1) 50 g | Catalyst solution (2) 4 g | 0.5 g | 450 g | 3 µm |
| Example 6 | Hydrophilic polymer (1) 50 g | Catalyst solution (3) 4 g | 0.5 g | 450 g | 3 µm |
| Example 7 | Hydrophilic polymer (2) 50 g | Catalyst solution (1) 4 g | 0.5 g | 450 g | 3 µm |
| Example 8 | Hydrophilic polymer (2) 50 g | Catalyst solution (1) 8 g | 0.5 g | 450 g | 3 µm |
| Example 9 | Hydrophilic polymer (2) 50 g | Catalyst solution (1) 0.03 g | 0.5 g | 450 g | 3 µm |
| Example 10 | Hydrophilic polymer (2) 50 g | Catalyst solution (1) 15 g | 0.5 g | 450 g | 3 µm |
| Example 11 | Hydrophilic polymer (3) 50 g | Catalyst solution (1) 4 g | 0.5 g | 450 g | 3 µm |
| Example 12 | Hydrophilic polymer (3) 50 g | Catalyst solution (1) 8 g | 0.5 g | 450 g | 3 µm |
| Example 13 | Hydrophilic polymer (3) 50 g | Catalyst solution (1) 0.03 g | 0.5 g | 450 g | 3 µm |
| Example 14 | Hydrophilic polymer (3) 50 g | Catalyst solution (1) 15 g | 0.5 g | 450 g | 3 µm |
| Example 15 | Hydrophilic polymer (4) 50 g | Catalyst solution (1) 4 g | 0.5 g | 450 g | 3 µm |
| Example 16 | Hydrophilic polymer (4) 50 g | Catalyst solution (1) 8 g | 0.5 g | 450 g | 3 µm |
| Example 17 | Hydrophilic polymer (4) 50 g | Catalyst solution (1) 0.03 g | 0.5 g | 450 g | 3 µm |
| Example 18 | Hydrophilic polymer (4) 50 g | Catalyst solution (1) 15 g | 0.5 g | 450 g | 3 µm |
| Example 19 | Hydrophilic polymer (5) 50 g | Catalyst solution (1) 8 g | 0.5 g | 450 g | 3 µm |
| Example 20 | Hydrophilic polymer (1) 47.5 g Hydrophilic polymer (C1) 2.5 g | Catalyst solution (1) 4 g | 0.5 g | 450 g | 3 µm |
| Example 21 | Hydrophilic polymer (1) 45 g Hydrophilic polymer (C1) 5 g | Catalyst solution (1) 4 g | 0.5 g | 450 g | 3 µm |
| Example 22 | Hydrophilic polymer (1) 40 g Hydrophilic polymer (C1) 10 g | Catalyst solution (1) 4 g | 0.5 g | 450 g | 3 µm |
| Example 23 | Hydrophilic polymer (1) 38 g Hydrophilic polymer (C1) 12 g | Catalyst solution (1) 4 g | 0.5 g | 450 g | 3 µm |
| Example 24 | Hydrophilic polymer (1) 35 g Hydrophilic polymer (C1) 15 g | Catalyst solution (1) 4 g | 0.5 g | 450 g | 3 µm |
| Example 25 | Hydrophilic polymer (1) 20 g Hydrophilic polymer (C1) 30 g | Catalyst solution (1) 4 g | 0.5 g | 450 g | 3 µm |
| Example 26 | Hydrophilic polymer (6) 50 g | Catalyst solution (1) 4 g | 0.5 g | 450 g | 3 µm |

### [Comparative Example]

Float plate glass (2mm thick) which is the most common transparent plate glass is prepared, and the surface of the plate glass is hydrophilized by UV/O₃ treatment for 10 minutes to prepare a substrate to be coated. Each coating solution having the formulation shown in Table 2 is stirred for 2 hours at 25°C, coated on the substrate by using a coating bar, and then dried at 150°C for 30 minutes to thereby form a hydrophilic film of 3.0 g/m² in dry coated amount.

**[Table 2]**

| | Hydrophilic Polymer (C1) | TMOS | Catalyst Solution (1) | Snow techs ZL | Snow techs C | Ethanol | Surfactant | Purified Water | Film Thickness (µm) |
|---|---|---|---|---|---|---|---|---|---|
| Comparative Example 1 | 50 g | - | 4 g | - | - | - | 0.5 g | 450 g | 3.0 |
| Comparative Example 2 | - | 540 g | 10 g | 180 g | - | - | 0.5 g | 450 g | 3.0 |
| Comparative Example 3 | 100 g | 540 g | - | - | 180 g | 180 g | 0.5 g | 450 g | 3.0 |

In Comparative Examples, components used are as follows.
TMOS: Tetramethoxysilane (manufactured by Tokyo Chemical Industry Co., Ltd.)
Catalyst solution (1): The same catalyst solution as in Examples.
Snowtechs ZL: 40% by mass aqueous solution of colloidal silica (particle diameter: 70-100 nm) dispersion
Snowtechs C: 20% by mass aqueous solution of colloidal silica (particle diameter: 10-20 nm) dispersion
Surfactant: The same surfactant as Examples.

### [Evaluation of hydrophilic member]

### (Hydrophilicity)

Measurment of the water drop contact angle in the air (measured by means of Drop Master 500 manufactured by Kyowa Interface Science Co., Ltd.)

### (Antifogging properties)

Each of the hydrophilic members obtained above is exposed to water vapor for 1 minute in the daytime under an indoor fluorescent lamp and, after separating from the water vapor, placed in an environment of 25°C and 10%RH and subjected to three-stage functional evaluation according to the following standards to evaluate the degree of fogging and its change under the fluorescent lamp of the same irradiation condition as described above.
A: No fogging is observed.
B: Though fogging is observed, it disappears within 10 seconds, and thus no fogging is observed.
C: Fogging is observed and does not disappear after 10 seconds.

### (Pencil hardness)

Test is conducted according to JIS K 5400 (using a pencil scratch hardness tester, 553-M, manufactured by Yasuda Seiki Seisakusho, Ltd.).

### (Wear test)

A sample is subjected to 200-time rubbing reciprocal motion with non-woven fabric (BEMCOT, manufactured by Asahi Kasei Fibers Corp.) using a reciprocal wear tester (HEIDON TYPE 30), and difference in water drop contact angle before and after the rubbing is calculated, followed by judging as described below.
A: The difference in water drop contact angle before and after wear is 5° or less.
B: The difference in water drop contact angle before and after wear is more than 5° and not more than 10°.
C: The difference in water drop contact angle before and after wear is more than 10° and not more than 20°.

### (Antifouling properties)

A sample is exposed by standing at an angle of 90° in a bath room which is used by 4 people on the average per day, ad deposition of stain is visually observed.
A: No stain deposits even after 3 months.
B: No stain deposits even after 1 month.
C: Stain deposits after one week.

### (Staining test 1)

A sample is dipped in a 1% by mass rinse aqueous solution (Kao Merit, manufactured by Kao Corporation) for 10 minutes and, after removing the rinse with running tap water (about 20 seconds), is dried at room temperature (25°C) for 1 hour. Thereafter, the water contact angle is measured. The difference in water drop contact angle before and after the test is calculated, followed by judging as described below.
A: The difference in water drop contact angle before and after wear is less than 5°.
B: The difference in water drop contact angle before and after wear is 5° to 10°.
C: The difference in water drop contact angle before and after wear is more than 10°.

### (Staining test 2)

0.2 g of palmitic acid is placed in a 50-ml glass vessel, and is covered with a lid of glass substrate having coated thereon a hydrophilic layer so that the hydrophilic layer side is exposed to palmitic acid. After exposing to the gas of palmitic acid at 105°C for 1 hour, the glass substrate is washed with running water for 30 minutes and dried at 80°C for 30 minutes. This procedure is regarded as one cycle and, after 5 cycles, the water drop contact angle is measured.
A: 30° or less
B: 31 to 40°
C: 41 to 70°
D: 71° or more

### (Surface zeta potential)

The surface zeta potential is calculated by measuring the electroosmotic flow using a laser zeta potentiometer (manufactured by Otsuka Electronics Co., Ltd.; ELS-Z2) and a cell for a platy sample, with polystyrene latex particles being monitor particles for light scattering.

Results of the evaluations according to the above-mentioned evaluation methods are shown in Table 3.

**[Table 3]**

| | Hydrophilicity (°) | Antifogging Properties | Pencil Hardness | Wear Resistance | Antifouling Test | Staining Test 1 | Staining Test 2 | Surface Zeta Potential (mV) |
|---|---|---|---|---|---|---|---|---|
| Example 1 | 6 | A | 4H | A | A | A | B | -6.7 |
| Example 2 | 8 | A | 4H | A | A | A | B | -7.6 |
| Example 3 | 6 | A | 3H | B | A | A | B | -6.5 |
| Example 4 | 12 | B | 4H | A | A | A | B | -6.8 |
| Example 5 | 6 | A | 4H | A | A | A | B | -6.2 |
| Example 6 | 6 | A | 4H | A | A | A | B | -5.9 |
| Example 7 | 4 | A | 4H | A | A | B | B | -14.1 |
| Example 8 | 6 | A | 4H | A | A | B | B | -14.2 |
| Example 9 | 6 | A | 3H | B | A | B | B | -14.1 |
| Example 10 | 12 | B | 4H | A | A | B | B | -14.6 |
| Example 11 | 8 | A | 4H | A | A | A | B | -3.7 |
| Example 12 | 8 | A | 4H | A | A | A | B | -3.7 |
| Example 13 | 8 | A | 3H | B | A | A | B | -3.1 |
| Example 14 | 13 | B | 4H | A | A | A | B | -3.5 |
| Example 15 | 5 | A | 4H | A | A | A | B | -9.6 |
| Example 16 | 7 | A | 4H | A | A | A | B | -9.4 |
| Example 17 | 7 | A | 3H | B | A | A | B | -9.2 |
| Example 18 | 11 | B | 4H | A | A | A | B | -9.5 |
| Example 19 | 16 | C | 4H | A | B | A | B | -7.2 |
| Example 20 | 8 | A | 4H | A | A | A | A | -2.1 |
| Example 21 | 10 | A | 3H | B | A | A | A | -1.8 |
| Example 22 | 12 | B | 3H | B | A | A | A | -1.2 |
| Example 23 | 12 | B | 3H | B | A | A | A | -1.0 |
| Example 24 | 13 | B | 3H | B | A | A | A | -0.8 |
| Example 25 | 15 | B | H | B | B | A | A | -0.4 |
| Example 26 | 9 | A | 4H | A | A | B | B | 9.1 |
| Comparative Example 1 | 5 | C | 2B | film delamination | C | film delamination | film delamination | -5.8 |
| Comparative Example 2 | 22 | C | 8H | C | C | C | C | -62.1 |
| Comparative Example 3 | 3 | A | 2B | C | C | C | C | -54.5 |

Also, when the glass substrate is altered to an aluminum plate, about the same performance is obtained, and superiority or inferiority of the performance observed in Examples do not change. As the aluminum substrate, those aluminum plates are used which have been prepared by repeating 3 times the procedure of dipping aluminum plates (A1200; 0.1 mm thick) in an alkaline washing solution (manufactured by Yokohama Oils & Fats Industry Co., Ltd.; Semiclean A 5% aqueous solution) for 10 minutes and washing with water.

As is apparent from Table 3, the hydrophilic films prepared by using the hydrophilic composition of the invention show good scratch resistance, wear resistance, and antifouling properties. In comparing Examples 1 to 18 and 20 to 26 with Examples 19, Example 19 shows low hydrophilicity, no antifouling properties, and comparatively low antifouling properties. This may be attributed to the difference in kind of hydrophilic polymer. Also, Examples 4, 10, 14, and 18 show somewhat low hydrophilicity due to the large amount of the catalyst, and show low antifogging properties. Examples 3, 9, 13, and 17 show somewhat inferior scratch resistance and wear resistance due to the small amount of the catalyst.
In comparing Examples 7 to 10 with Examples 1 to 6 and 11 to 26, Examples 7 to 10 show large negative zeta surface potentials and tend to exhibit reduced hydrophilicity in the staining tests.
Also, Examples 20 to 25 wherein two kinds of the hydrophilic polymers are combined show the highest antifouling properties. However, as is apparent from Example 25, when the amount of polymer having one cross-linking group (hydrophilic polymer C1) is too large, there result reduced hydrophilicity and scratch resistance.
On the other hand, Comparative Example 1 wherein the sample is formed by using a hydrophilic composition containing a hydrophilic polymer outside the scope of the invention shows insufficient scratch resistance, wear resistance, and antifouling properties, which are at practically problematic levels. Also, Comparative Example 2 wherein the sample is formed by using a composition containing an inorganic material sol shows high scratch resistance but shows insufficient hydrophilicity, wear resistance, and antifouling properties, which are at practically problematic levels. In addition, in Comparative Example, though both high hydrophilicity and high scratch resistance can be obtained by combining a hydrophilic polymer outside the scope of the invention and an inorganic material sol, antifouling properties and wear resistance are insufficient and at practically problematic levels.

### INDUSTRIAL APPLICABILITY

According to the present invention, there can be provided a hydrophilic composition which can form a hydrophilic coating film having high scratch resistance and antifouling properties without hybridizing with so-gel. The hydrophilic composition of the invention is applicable to various uses such as formation of coating on a fin member for use in a heat exchanger for an air conditioner.
Although the invention has been described in detail and by reference to specific embodiments, it is apparent to those skilled in the art that it is possible to add various alterations and modifications insofar as the alterations and modifications do not deviate from the spirit and the scope of the invention.
This application is based on a Japanese patent application filed on Sep. 12, 2007 (Japanese Patent Application No. 2007-236854) and a Japanese patent application filed on Mar. 25, 2008 (Japanese Patent Application No. 2008-79327), and the contents thereof are incorporated herein by reference.

## Claims

1. A hydrophilic composition, comprising:
a hydrophilic polymer (A) having two or more hydrolyzable silyl groups per molecule; and a catalyst (B), with a surface zeta potential of a coating film obtained by coating and drying the hydrophilic composition being from -15 mV to +10 mV.

2. The hydrophilic composition according to claim 1,
wherein the hydrophilic polymer (A) contains a structure represented by following formula (I): 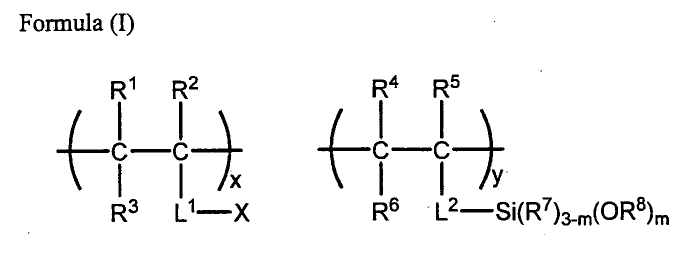 wherein R¹ to R⁸ each independently represents a hydrogen atom or a hydrocarbon group; L¹ represents a single bond or a multi-valent organic linking group; L² represents a single bond or a multi-valent organic linking group having one or more structures selected from the group consisting of -CONH-, -NHCONH-, -OCONH-,
- SO₂NH-, and -SO₃-; m represents an integer of from 1 to 3; x and y each represents a composition ratio, with x being 0<x<100 and y being 0<y<100; X represents -OH, -ORₐ,
- CORₐ, -CO₂Rₑ, -CON(Rₐ)(R_{b}), -N(Rₐ)(R_{b}), -NHCOR_{d}, -NHCO₂Rₐ, -OCON(Rₐ)(R_{b}),
- NHCON(Rₐ)(R_{b}), -SO₃Rₑ, -OSO₃Rₑ, -SO₂R_{d}, -NHSO₂R_{d}, -SO₂N(Rₐ)(R_{b}),
- N(Rₐ)(R_{b})(R_{c}), -N(Rₐ)(R_{b})(R_{c})(R_{g}), -PO₃(Rₑ)(R_{f}), -OPO₃(Rₑ)(R_{f}) or -PO₃(R_{d})(Rₑ), where Rₐ, R_{b}, and R_{c} each independently represents a hydrogen atom or a straight, branched or cyclic alkyl group, R_{d} represents a straight, branched or cyclic alkyl group, Rₑ and R_{f} each independently represents a hydrogen atom, a straight, branched or cyclic alkyl group, an alkali metal, an alkaline earth metal or an onium, and Rg represents a straight, branched or cyclic alkyl group, a halogen atom, an inorganic anion or an organic anion.

3. The hydrophilic composition according to claim 1 or 2,
wherein the surface zeta potential of the coating film formed by coating and drying the hydrophilic composition is from -10 mV to 0 mV.

4. The hydrophilic composition according to any one of claims 1 to 3,
wherein the catalyst (B) includes at least one member selected from the group consisting of acids, alkalis, metal chelates, and metal salts.

5. The hydrophilic composition according to any one of claims 1 to 4, which contains the catalyst (B) in an amount of from 0.1 to 20 parts by mass per 100 parts by mass of the hydrophilic polymer (A) having two or more hydrolyzable silyl groups per molecule.

6. The hydrophilic composition according to any one of claims 1 to 5,
wherein the coating film obtained by coating and drying the hydrophilic composition has a contact angle to water of 15° or less.

7. The hydrophilic composition according to any one of claims 1 to 6,
wherein the coating film obtained by coating and drying the hydrophilic composition has a contact angle to water of 10° or less.

8. The hydrophilic composition according to any one of claims 1 to 7, further comprising:
a hydrophilic polymer (C) having one hydrolyzable silyl group per molecule.

9. The hydrophilic composition according to claim 8,
wherein a mass ratio of the hydrophilic polymer (A) to the hydrophilic polymer (C) (hydrophilic polymer (A)/hydrophilic polymer (C)) is within the range of from 5/95 to 50/50.

10. A fin member, comprising:
a fin body; and
a hydrophilic layer provided on at least a part of a surface of the fin body,
wherein the hydrophilic layer is formed by coating and drying the hydrophilic composition according to any one of claims 1 to 9.

11. The fin member according to claim 10,
wherein the fin body is made of aluminum.

12. A heat exchanger, comprising the fin member according to claim 11.

13. An air-conditioner, comprising the heat exchanger according to claim 12.
